(19) Europäisches Patentamt
European Patent Office
Office européen des brevets

(11) **EP 3 252 909 B1**

(12) # EUROPEAN PATENT SPECIFICATION

(45) Date of publication and mention
of the grant of the patent:
**01.01.2020  Bulletin 2020/01**

(51) Int Cl.:
***H02J 3/38*** *(2006.01)*

(21) Application number: **17171489.2**

(22) Date of filing: **17.05.2017**

(54) **PHOTOVOLTAIC POWER DEVICE AND WIRING**

**PHOTOVOLTAIKSTROMVORRICHTUNG UND VERKABELUNG**

**DISPOSITIF ET CÂBLAGE D'ALIMENTATION PHOTOVOLTAÏQUE**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.05.2016  US 201662341147 P
16.09.2016  US 201662395461 P**

(43) Date of publication of application:
**06.12.2017  Bulletin 2017/49**

(73) Proprietor: **Solaredge Technologies Ltd.
4673335 Herzeliya (IL)**

(72) Inventors:
• **Yoscovich, Ilan
4673335 Herzeliya (IL)**
• **Glovinsky, Tzachi
4673335 Herzeliya (IL)**
• **Bieber, Ofir
4673335 Herzeliya (IL)**

(74) Representative: **V.O.
P.O. Box 87930
Carnegieplein 5
2508 DH Den Haag (NL)**

(56) References cited:
**CN-U- 203 367 304       DE-A1- 4 032 569
US-A1- 2005 172 995**

EP 3 252 909 B1

**Description**

**BACKGROUND:**

A photovoltaic string may integrate photovoltaic power devices to allow operation at high efficiency. These power devices may be variously configured, and they may be integrated into the photovoltaic string in various ways. Photovoltaic power device may include optimization functionality, configured to maximize the power output by a photovoltaic generator it is coupled to. Typically, a photovoltaic power device may be coupled to one or more photovoltaic generators, and it may measure one or more circuit parameters (e.g. voltage or current) and control these parameters to obtain a more effective operating point.

One of the challenges of photovoltaic system design is proper design and integration of photovoltaic power devices (e.g. optimizers). Properly designed and well-integrated, optimization circuits may improve system performance without incurring excessive additional costs. Poorly designed power devices and/or systems may not be cost-effective. For instance, some designs may result in photovoltaic string currents which require installation of long, thick and expensive cables.

CN203367304U discloses a system comprising a plurality of power devices arranged in a sequence, wherein each power device comprises an output and an input and wherein the output of a first power device of an adjacent pair of power devices is connected through one of a plurality of power sources to the input of a second power device of the adjacent pair of power devices.

**SUMMARY:**

According to one aspect, the present invention provides a system as defined in claim 1. According to a further aspect, the present invention provides a method as defined in claim 13. The following summary is a short summary of some of the inventive concepts for illustrative purposes only, and is not intended to limit or constrain the inventions and examples in the detailed description. One skilled in the art will recognize other novel combinations and features from the detailed description.

Embodiments herein may employ photovoltaic strings including a photovoltaic (PV) power device (e.g. optimizer) with a specialized wiring configuration, which enables high string efficiency without incurring excessive wiring costs.

In illustrative systems, a circuit may be utilized to reduce the cost of the system. For example, an illustrative PV power device may divide the current of a photovoltaic string into two or more portions, creating smaller current portions that allow for cables which may be thinner and cheaper than those which would otherwise be needed. In some embodiments, the cabling savings may be substantial. In some embodiments, a cable built into photovoltaic generators may be used to carry one portion of the current, and the other portions of the current may be carried by direct-current (DC) or alternating-current (AC) cables bypassing the photovoltaic generators. In certain embodiments, the circuit may be implemented on a single integrated circuit with a photovoltaic generator, DC-DC converter, DC-AC inverter or micro-inverter. In some embodiments, the circuit can be coupled to one or more photovoltaic generators, DC-DC converters, DC-AC inverters or micro-inverters. In some embodiments, photovoltaic power devices may be coupled to one another with cables at the time of manufacturing and stored in a convenient manner (e.g. wound around a cylindrical reel) to allow fast and easy deployment in the field.

As noted above, this summary is merely a summary of some of the features described herein. It is not exhaustive, and it is not to be a limitation on the claims.

**BRIEF DESCRIPTION OF THE DRAWINGS**

These and other features, aspects, and advantages of the present disclosure will become better understood with regard to the following description, claims, and drawings. The present disclosure is illustrated by way of example, and not limited by, the accompanying figures.

Figs. 1A-1F are block diagrams according to various aspects of the present disclosure.

Fig. 2A illustrates a string section according to various aspects of the present disclosure.

Fig. 2B illustrates a PV power device according to various aspects of the present disclosure.

Figs. 3A-3B illustrate PV power device circuits according to various aspects of the present disclosure.

Fig. 4A illustrates a PV power device configuration according to various aspects of the present disclosure.

Fig. 4B illustrates a portion of a string of PV power devices according to various aspects of the present disclosure.

Fig. 4C illustrates a PV power device configuration according to various aspects of the present disclosure.

Fig. 5 illustrates a PV power device and PV generator arrangement according to various aspects of the present disclosure.

Fig. 6 illustrates a PV system according to various aspects of the present disclosure.

Figs. 7A-7B illustrate a PV system according to various aspects of the present disclosure.

Fig. 7C illustrates a PV system and associated method according to various aspects of the present disclosure.

Fig. 7D illustrates a method according to various aspects of the present disclosure.

Figs. 8, '9A and 9B illustrate various components of a PV system according to various aspects of the present disclosure.

Figs. 10A - 10G illustrate operational aspects of a PV system according to various aspects of the present disclosure.

Figs. 11A - 11C illustrate methods of operating and associated states of a PV system according to various aspects of the present disclosure.

## DETAILED DESCRIPTION

In the following description of various illustrative embodiments, reference is made to the accompanying drawings, which form a part hereof, and in which is shown, by way of illustration, various embodiments in which aspects of the disclosure may be practiced. It is to be understood that other embodiments may be utilized and structural and functional modifications may be made, without departing from the scope of the present disclosure.

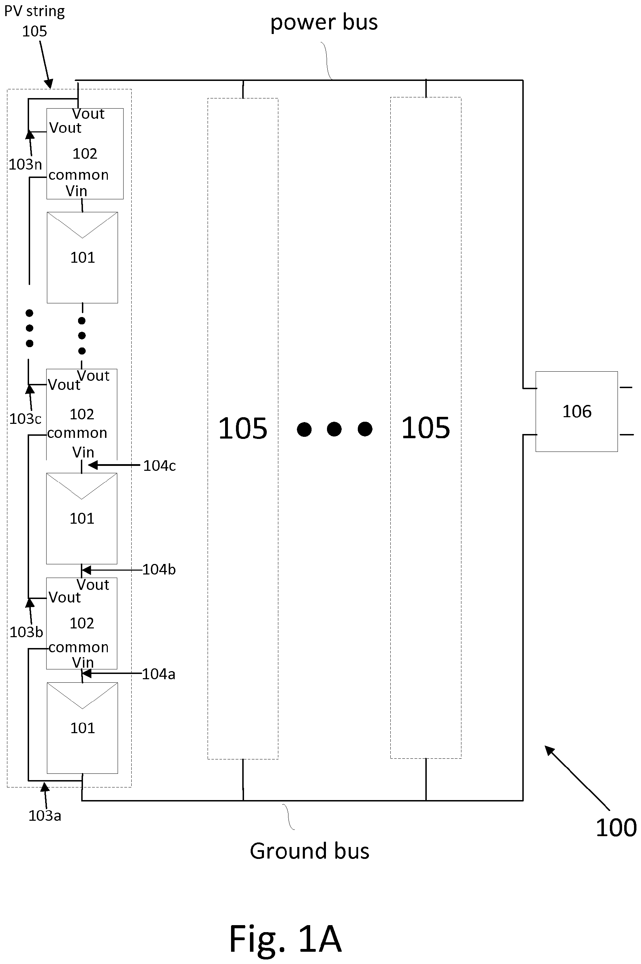

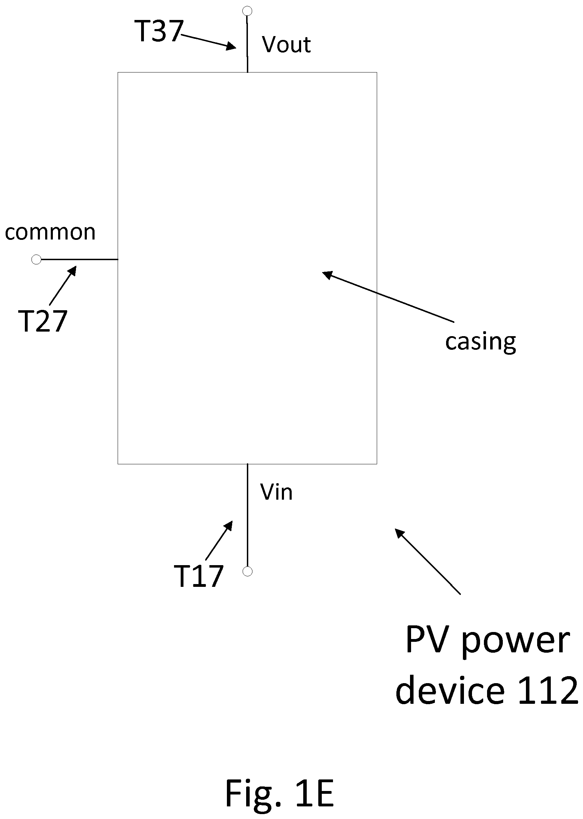

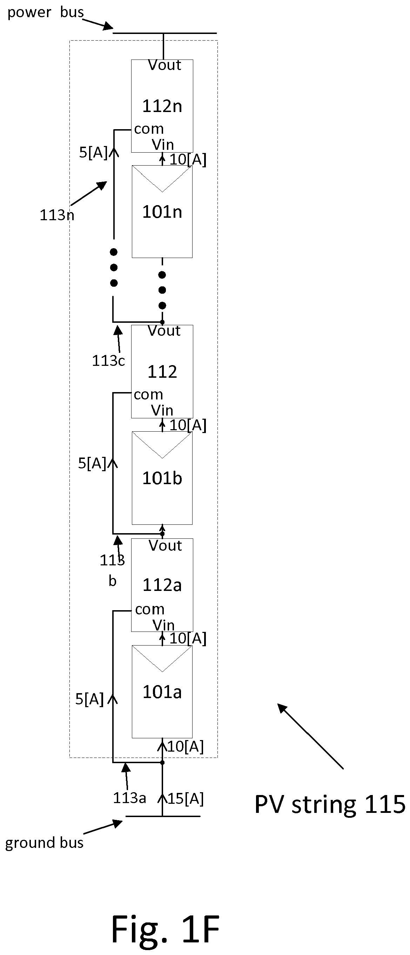

Referring to Fig. 1A, illustrative photovoltaic installation 100 may include one or more photovoltaic (PV) generators 101. Each PV generator may be coupled to a one or more photovoltaic (PV) power device(s) 102. Each PV generator 101 may comprise one or more solar cells, solar cell strings, solar panels or solar shingles. In some embodiments, PV power device 102 may comprise a power conversion circuit such as a direct current - direct current (DC/DC) converter such as a buck, boost, buck-boost, buck+boost, flyback and/or forward converter, or a charge-pump. In some embodiments, PV power device 102 may comprise a direct current - alternating current (DC/AC) converter, also known as an inverter or a micro-inverter. In some embodiments, PV power device 102 may comprise a maximum power point tracking (MPPT) circuit with a controller, configured to extract maximum power from one or more of the PV generator(s) to which the power device is coupled. PV power device 102 may further comprise a control device such as a microprocessor, Digital Signal Processor (DSP) and/or a Field Programmable Gate Array (FPGA). In some embodiments, the control device may implement MPPT control discussed above (e.g. "perturb and observe" methods, impedance matching) for determining an optimal or preferred operating point for a connected power source.

In some embodiments, PV power device 102 may comprise circuitry and/or sensors configured to measure parameters on or near the photovoltaic generator(s), such as the voltage and/or current output by the photovoltaic generator(s), the power output by the photovoltaic generator (s), the irradiance received by the module and/or the temperature on or near the photovoltaic generator (s).

In the illustrative embodiment depicted in Fig. 1A, a plurality of PV power devices 102 are coupled to a plurality of PV generators 101, to form a photovoltaic string 105. One terminal of the resultant photovoltaic string 105 may be coupled to a power (e.g., direct current) bus, and the other terminal of the string 105 may be coupled to a ground bus. In some embodiments, the power and ground buses may be input to system power device 106. In some embodiments, system power device 106 may include a DC/AC inverter and may output alternating current (AC) power to a power grid, home or other destinations. In some embodiments, system power device 106 may comprise a combiner box, transformer and/or safety disconnect circuit. For example, system power device 106 may comprise a DC combiner box for receiving DC power from a plurality of PV strings 105 and outputting the combined DC power. In some embodiments, system power device 106 may include a fuse coupled to each string 105 for overcurrent protection, and/or one or more disconnect switches for disconnecting one or more PV strings 105.

In some embodiments, system power device 106 may include or be coupled to a control device and/or a communication device for controlling or communicating with PV power devices 102. For example, system power device 106 may comprise a control device such as a microprocessor, Digital Signal Processor (DSP) and/or a Field Programmable Gate Array (FPGA) configured to control the operation of system power device 106. System power device 106 may further comprise a communication device (e.g. a Power Line Communication circuit and/or a wireless transceiver) configured to communicate with linked communication devices included in PV power devices 102. In some embodiments, system power device 106 may comprise both a control device and a communication device, the control device configured to determine desirable modes of operation for PV power devices (e.g. power devices 102), and the communication device configured to transmit operational commands and receive reports from communication devices included in the PV power devices.

In some embodiments, the power and ground buses may be further coupled to energy storage devices such as batteries, flywheels or other storage devices.

PV power devices 102 may be coupled to photovoltaic generators 101 such that each PV power device may be coupled to two PV generators and two other PV power devices, with the possible exception of one power device coupled to the ground or power bus. Similarly, each PV generator 101 may be coupled to two PV power devices 102, with the possible exception of one PV generator coupled to the ground or Power bus.

In some embodiments, the PV power devices may be "standalone" products, manufactured and packaged separately. In some embodiments, the PV power devices may be coupled to one another using conductors of appropriate length at the time of manufacturing, packaged and sold as an integrated unit, and deployed as an integrated unit when installing a PV system (e.g. photovoltaic installation 100). For example, power devices 102 may be assembled as an integrated string of power devices or part of a string of power devices, and may be coupled to one another during manufacturing. During installation, the integrated string may be simply strung out alongside photovoltaic generators 101 and each power device 102 may be coupled to a corresponding one of the photovoltaic generators 101 quickly and easily, forming photovoltaic string 105, or part of string 105.

Each PV power device 102 may comprise several terminals for coupling (e.g. connecting) to photovoltaic generators 101 and/or other PV power devices 102. In the illustrative embodiment of Fig. 1A, each PV power device 102 comprises four terminals: One "Vin" terminal for receiving power from the positive output of a PV generator 101, two "Vout" terminals for outputting power from the PV power device 102, and one "common" terminal for coupling to a "Vout" terminal of a different PV power device 102 or to a ground bus. In some embodiments, each PV power device 102 may feature a different number of terminals, and/or may feature four terminals configured differently, as will be illustrated in further embodiments.

Electrical current is routed along string 105 in two paths. A first path is formed by conductors coupling PV power devices 102 while bypassing photovoltaic generators 101, and a second path is formed by coupling photovoltaic generators 101 to PV power devices 102. For example, conductors 103b and 103c are connected between "Vout" and "common" terminals of PV power devices, without being directly connected to a PV generator. Conductors 104a, 104b and 104c are examples of conductors which connect PV generators 101 to terminals of a PV power device 102. Conductors deployed at either end of a PV string (e.g. PV string 105) may be connected in a manner different from the conductors forming the first and second paths. For example, conductor 103a is connected on one end to the ground bus and a terminal of a PV generator, and on the other end the "common" terminals of a PV power device 102. Conductor 103n connects the two "Vout" terminals of one PV power device 102 to each other and to the power bus, to combine the currents from the two paths and deliver the combined currents to the power bus.

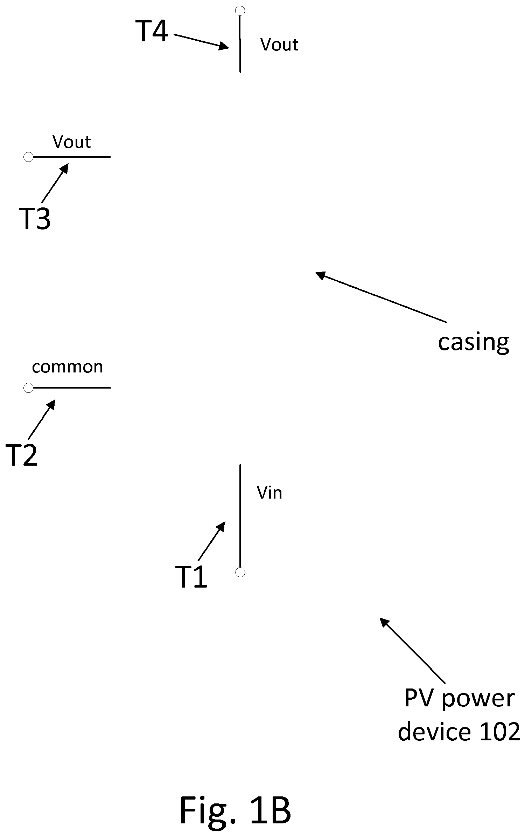

Reference is now made to Fig. 1B, which shows an illustrative embodiment of the external connection terminals of a photovoltaic power device 102, such as those featured in illustrative photovoltaic installation 100. PV power device 102 may include four terminals configured for electrically connecting to terminals labeled "Vin", "Vout" and "common" in Fig. 1A Terminal T1 may be configured to receive an input current from a photovoltaic generator or power device. Terminal T2 may be configured to be coupled to a photovoltaic generator and/or a photovoltaic power device, and may serve as a common terminal for both input and output. Terminals T3 and T4 may be configured to output electrical power (voltage and current) to additional PV generators and/or power devices. Terminals T3 and T4 may output the same voltage in reference to the common terminal T2, though they may output different current and different power. The physical location of the terminals in relation to the casing of the power device may be variously configured to allow for convenient coupling in a photovoltaic string. This illustrative embodiment features terminals T1 and T4 on opposite sides of the power device, with terminals T2, T3 along one side. Other configurations may be considered and implemented in alternative embodiments and are within the scope of embodiments included herein.

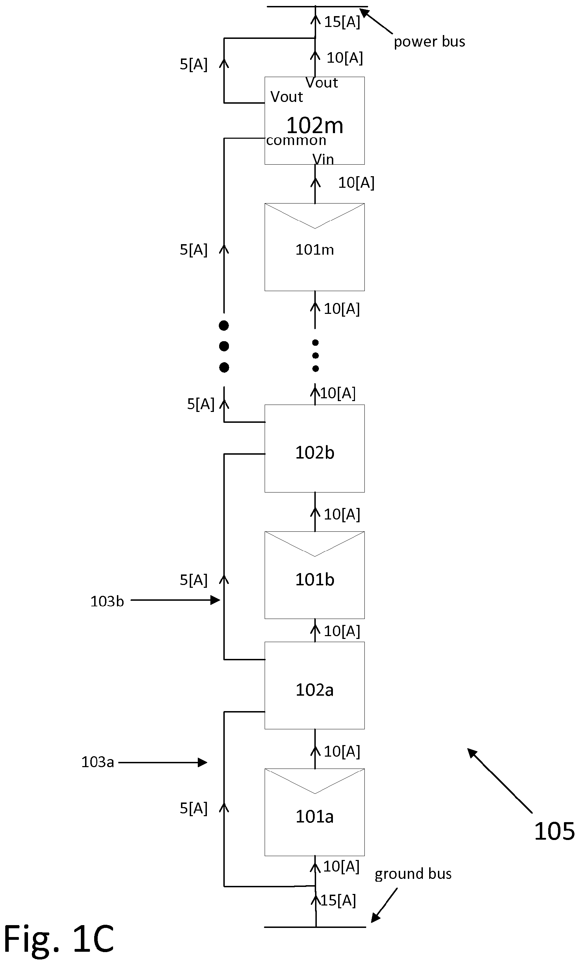

Reference is now made to Fig. 1C, which shows a numerical illustrative embodiment featuring a part of a photovoltaic string 105. Photovoltaic string 105 as depicted in this figure may be used as PV string 105 in Fig. 1A. PV string 105 may include a plurality of photovoltaic (PV) generators 101. Each PV generator 101 may be coupled to a one or more photovoltaic power device(s) 102. Each PV generator 101 may comprise one or more solar cells, one or more solar cell strings, one or more solar panels, one or more solar shingles, or combinations thereof. For example, a PV generator 101 may include a solar panel, two solar panels connected in series or in parallel, or eight solar panels connected in series. In some embodiments, PV power device 102 may comprise a power conversion circuit such as a direct-current-to-direct current (DC/DC) converter such as a buck, boost, buck+boost (e.g., a buck converter followed by a bust converter or a boost converter followed by a book converter), buck-boost, flyback and/or forward converter. In some embodiments, PV power device 102 may comprise a time-varying DC/DC converter, configured to output a different DC voltage at different times. For example, PV power device 102 may comprise a time-varying DC/DC converter configured to output a positive voltage triangular wave, or a voltage wave resembling a rectified sine wave. In some embodiments, PV power device 102 may comprise a direct current - alternating current (DC/AC) converter, also known as an inverter (e.g., a micro-inverter). In some embodiments, PV power device 102 may comprise a Maximum Power Point Tracking (MPPT) circuit with a controller, configured to extract maximum power from one or more of the PV generator(s) the PV power device is coupled to. PV power devices 102 may be coupled to photovoltaic generator 101 such that each PV power device may be coupled to two PV generators and two other PV power devices, with the possible exception of a PV power device coupled to the ground bus (e.g. beginning PV power device 102a) or a PV power device coupled to the power bus (e.g. ending PV power device 102m).. Similarly, each PV generator 101 may be coupled to two PV power device 102, with the possible exception of one PV generator coupled to the ground or power bus, such as PV generator 101a depicted in Fig. 1C. The combined string current (i.e. the current flowing between the ground bus and the power bus) may be, in this illustrative embodiment, 15[A]. In other embodiments the string current may be higher or lower. Each photovoltaic generator 101 may operate at a current of 10[A]. The full string current may be routed through two paths, one path flowing through the PV generators 101 and carrying 10[A], the other path bypassing the PV generators and flowing from one PV power device to another. In the illustrative embodiment shown in Fig. 1C, the string bypass path may be comprised of conductors 103a, 103b etc. Conductor 103a may route 5[A] from the ground bus to beginning PV power device 102a, bypassing PV generator 101a. Bypass path 103b may be coupled to an output of PV beginning power device 102a and carry 5[A] to PV power device 102b, bypassing PV generator 101b. Additional bypass paths may be similarly coupled, to route 5[A] through the string while bypassing the PV generators. In some embodiments, the current flowing through the modules may vary from module to module and from time to time, and the current flowing through the bypass paths may similarly vary. Fig. 1C illustrates an illustrative embodiment in which all PV generators 101 (e.g. 101a, 101b etc.) are operating at a maximum power point current of 10[A]. In some operating conditions, different PV generators may have different maximum power points such that different PV generators conduct maximum-power currents of different magnitudes, as will be described in other embodiments disclosed herein.

Different PV generators may operate at different power points, even in the same PV installation. As a numerical example, two PV generators may be capable of outputting 300[W], with one PV generator operating at a maximum power point of 20[V] and 15[A], and another PV generator operating at a maximum power point of 30[V] and 10[A]. As a different example, two PV generators may be capable of generating different maximum power levels. For example, one PV generator may output 300[W] and operate at a maximum power point of 20[V] and 15[A], while a second PV generator may be partially shaded and/or dirty, and be capable of outputting only 266[W] at a maximum power point of 19[V] and 14[A]. An MPPT circuit may be configured to identify the maximum power point of one or more PV generators the MPPT circuit is coupled to, and to operate the PV generator at the PV generator's maximum power point independent of temperature, solar radiance, shading or other performance deterioration factors of other PV generators in the installation. In some PV installations, a plurality of PV generators may all be operating at their respective maximum power points, with each PV generator operating at a different current independent of the other generators. In illustrative embodiments, bypass paths (e.g. conductors 103a, 103b etc.) may carry differing currents to compensate for differing PV generator maximum power point currents.

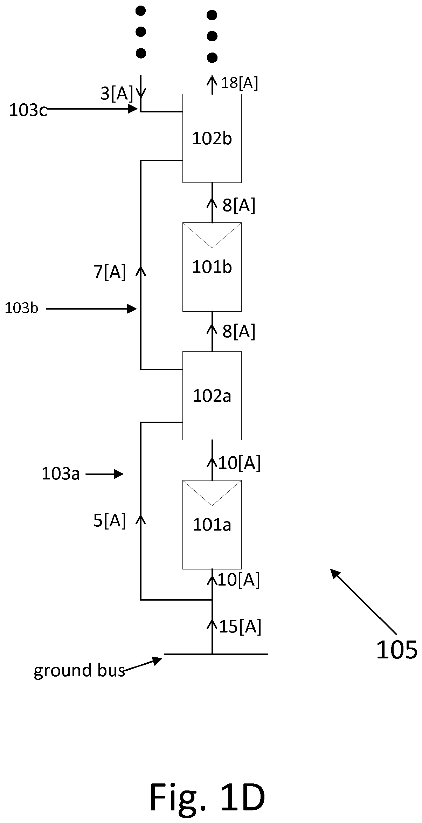

Reference is now made to Fig. 1D, which shows a portion of a photovoltaic string according to some illustrative embodiments. Photovoltaic string 105 comprises a plurality of PV generators 101 (e.g. 101a, 101b etc.) and PV power devices 102 (e.g. 102a, 102b etc.). Photovoltaic string 105 may be the same as or part of PV string 105 of Fig. 1A. The coupling method of the PV generators and PV power devices to one another may be similar to embodiments previously described herein. In this illustrative embodiment, the PV string 105 current may be 15[A]. PV generator 101a may operate at 10[A], with 5[A] bypassing the module via conductor 103a, which is coupled to beginning PV power device 102a. PV generator 101b may operate at 8[A], with 8[A] flowing to the PV generator from beginning PV power device 102a. Beginning PV power device 102a may further output 7[A] flowing over bypass path 103b, which is coupled to PV power device 102b. PV power device 102b may receive 8[A] from PV generator 101b and 7[A] via conductor 103b, and output 18[A] to the next PV generator in the string (not depicted) and output -3[A] over conductor 103c to the next PV power device in the string (not depicted). A negative bypass current simply indicates a reverse direct current (i.e. flowing in the opposite direction compared to the current portion flowing through the photovoltaic generators). In some embodiments, the bypass current may be an alternating current (AC), while the current portion which flows through the PV generators may be a direct current (DC) as further described below. In some embodiments, both the PV generator and bypass paths may carry a direct current.

By splitting the full string current into multiple portions and routing each portion along a different path, some embodiments may offer advantages. Conduction losses along a photovoltaic string may be expressed as $P_{loss} = I^2 * R$, where $P_{loss}$ denotes the total conduction losses, $I$ denotes the string current and R the combined resistance of the string conductors. Conductor resistance is calculated as $R = \frac{\rho \ell}{A}$, when $\rho$ denotes the resistivity

of the conducting material, $\ell$ is the conductor length and A denotes the conductor cross section. As indicated by the first equation, a decrease in current results in a quadratic decrease in conduction losses. Therefore, it is beneficial to minimize current flowing through any single path in the system, as losses may decrease and higher efficiency may be obtained. Furthermore, many photovoltaic generators (e.g. solar panels) are sold already featuring cables which may be rated to support a current which is lower than the desired string current. In one type of PV installation featuring PV generators and PV power devices, PV generator cables may couple a PV generator to a PV power device while carrying the PV generator's maximum power point current, with the PV power device featuring additional cables to carry the entire string current. In certain PV installations, this may result in both higher losses (e.g. because of losses incurred by both the PV generator cables carrying the full generator currents and the PV power device cables carrying the full string current) and higher cabling costs (e.g. not taking advantage of the length of the PV generator cables to reduce the length of the PV power device cables). By splitting the string current into multiple portions, the included photovoltaic generator cables may be utilized to support a portion of the current, and an additional cable (which may also be required only to support a portion of the current, and may therefore be thinner and cheaper) may be added at a lower cost than the cost of replacing the entire photovoltaic generator cable. Additionally, the cost of conductors is not always linear, and the price of a cable rated to carry 15[A] may sometimes be higher than the combined costs of a 10[A]-rated cable and a 5 [A]-rated cable.

Referring now to Fig. IE, illustrative photovoltaic power devices utilized in illustrative embodiments herein may feature different numbers of terminals. For example, power device 112 may include three terminals: terminal **T17** may be utilized to receive an input voltage (Vin), terminal **T37** may be utilized to output an output voltage (Vout), and terminal **T27** may output a voltage level common to the input and output. The internal circuitry of power device 112 may be similar to that of other power devices discussed in detail herein, with only one output voltage terminal made available. If desirable, the output voltage terminal may be split during system deployment using a splitting device, such as a splice connector (e.g. a T-connector).

Reference is now made to Fig. IF, which shows an illustrative embodiment of photovoltaic string 115 according to certain embodiments. PV string 115 may be used as string 105 of Fig. 1A. In this illustrative embodiment, each of a plurality of PV generators in a PV string (e.g. PV string 115) may be coupled to two PV power devices, with the exception of one PV generator (e.g. PV generator 101a) which may be coupled to the ground bus. Each of a plurality of PV power devices in a PV string (e.g. PV string 115) may be coupled to two PV generators, with the exception of one PV power device (e.g. PV power device 112n) which may be coupled to the power bus. Similar to other embodiments disclosed herein, the string current may be divided into two portions and routed along two paths, with a first path passing through PV generators 101 (e.g., 101a, 101b, etc.) and a second path comprising bypass paths 113 (e.g. path 113a, path 113b, etc.) which bypass the modules and carry current from one PV power device to the next PV power device in the string. As a numerical example, the string current may be 15[A], with 10[A] being routed through the PV generators, and 5[A] being routed through the power devices. Each power device 112 may output 15[A] from its single Vout terminal. The power devices 112 depicted may be arranged and implemented similarly to the power device depicted in Fig. IE, where the power device's Vin terminal is at the bottom of the power device, the common terminal is at the side and the device's Vout terminal is at the top. The power devices 112 may be implemented using a device similar to the device shown in Fig. 1B, with a reduced number of terminals (e.g. combining **T3** and **T4** to a single terminal).

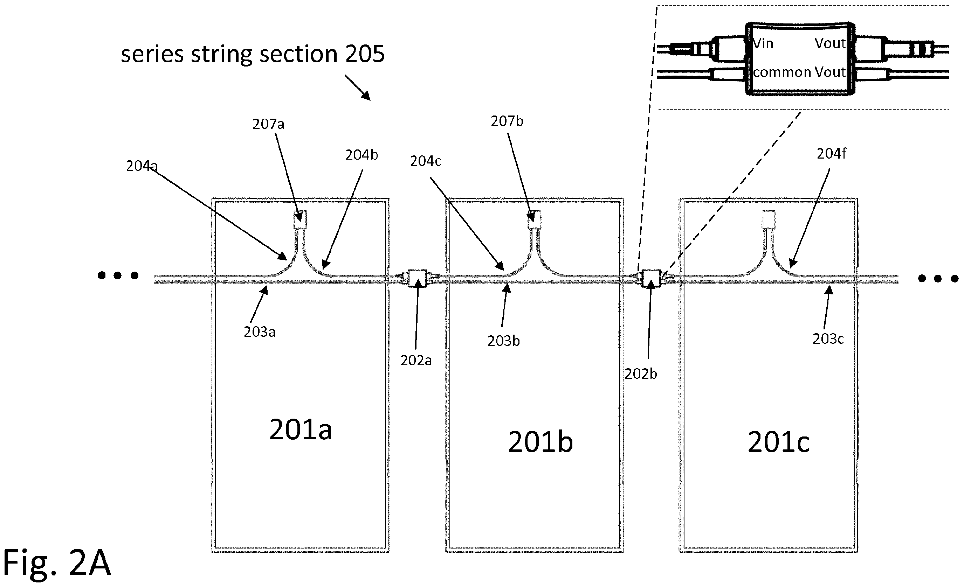

Reference is now made to Fig. 2A, which shows an illustrative embodiment of a series string section of photovoltaic string 205, which may be part of or the same as photovoltaic string 105 that may be found in systems such as photovoltaic installation 100. PV generator 201a may comprise a photovoltaic panel including junction box 207a.

PV power device 202a may be coupled to PV generators 201a and 201b, and PV power device 202b may be coupled to PV generators 201b and 201c. PV power devices 202a and 202b may be similar to or the same as PV power devices 102 of Fig. 1A, and may feature four electrical terminals ("**Vin**", "**common**" and two "**vout**" terminals) arranged as depicted in Fig. 2A. In some embodiments, the two "**Vout**" terminals may be arranged differently (e.g. arranged such as power device 102 of Fig. 1B) or combined into one, similarly to PV power device 112 of Fig. IE. Bypass cable 203b may be connected between a "**Vout**" terminal of PV power device 202a and the "**common**" terminal of PV power device 202b. Panel cable 204b may couple a terminal (e.g. the higher-voltage terminal) of PV generator 201a to the "**Vin**" terminal of PV power device 202a, and panel cable 204c may couple a "**Vout**" terminal of PV power device 202a to PV generator 201b (e.g. to the lower voltage terminal of PV generator 201b).

In some embodiments, PV generator 201a may be the "first" module in a section of photovoltaic series string 205. In some embodiments, a splice connector (e.g. a "T-connector") may combine panel cable 204a and bypass cable 203a and be connected to a ground bus. Similarly, in some embodiments, PV generator 201c may be the "last" module in photovoltaic series string section 200. In some embodiments, a splice connector (e.g. a "T-connector") may combine panel cable 204f and bypass cable 203c and be connected to a power bus.

PV generator 201 (e.g. any of PV generators 201a-201c), the connected junction box 207 and the connected panel cables 204 may be a pre-integrated assembly before connection to PV power devices 202. Bypass cables 203 may be pre-integrated with one of the connected PV power devices (e.g., bypass cable 203b may be an integrated part of PV power device 202a or 202b). Bypass cables 203 may be two cables spliced together during assembly of the string section, with each portion an integrated part of a PV power device (e.g., bypass cable 203b may be comprise two cables, with one cable integral to 202a and the other cable integral to 202b).

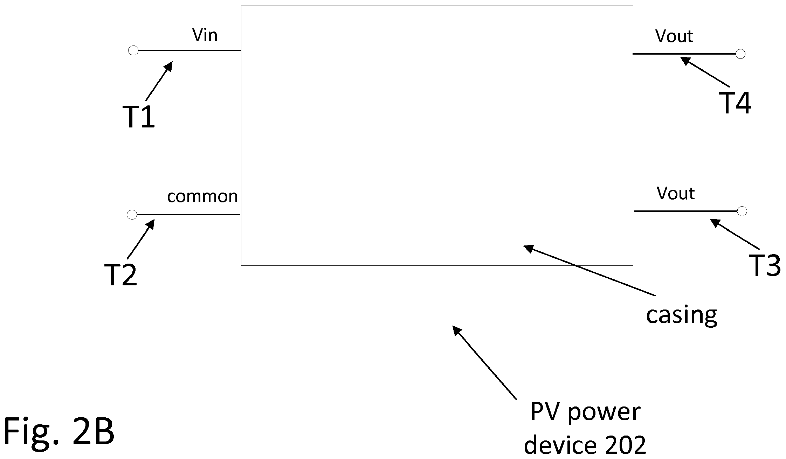

Reference is now made to Fig. 2B, which shown an illustrative embodiment of the external connection terminals of a photovoltaic power device 202, such as those featured in the illustrative string section in Fig 1B. PV power device 202 may include four terminals. Terminal **T1** may be configured to receive an input from a photovoltaic generator or power device. Terminal **T2** may be configured to be coupled to a photovoltaic generator and/or a photovoltaic power device, and may serve as a common terminal for both input and output. Terminals **T3** and **T4** may be configured to output voltage, current and/or power to additional PV generators and/or power devices. Terminals **T3** and **T4** may output the same voltage in reference to the common terminal **T2,** though they may output different current and different power. The physical location of the terminals in relation to the casing of the power device may be arranged to allow for convenient coupling in a photovoltaic string. This illustrative embodiment features terminals **T1**, **T2** on the same side of the power device, with terminals **T3, T4** located on the **opposite** side. Other arrangements may be considered and implemented in alternative embodiments and are within the scope of embodiments included herein.

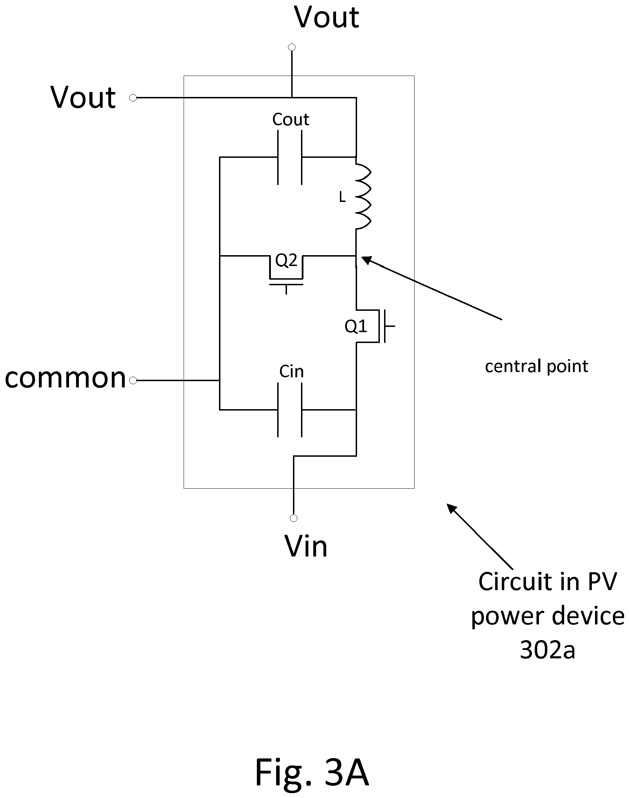

Reference is now made to FIG. 3A, which shows some of the internal circuitry of a photovoltaic power device **302a** according to various illustrative embodiments (e.g., PV power device 302a may be similar to or the same as PV power device 102 of Figs. 1A-1D, or PV power device 202 of Figs. 2A-2B). In some embodiments, photovoltaic power device 302a may be implemented using a variation of a Buck DC/DC converter. The power device may include a circuit having two input terminals, denoted **Vin** and **common,** and two output terminals which output the same voltage **Vout.** The input and output voltages are in relation to the **common** terminal. The circuit may include an input capacitor **Cin** coupled between the common terminal and the **Vin** terminal, an output capacitor coupled between the common terminal and the **Vout** terminals. The circuit may include a central point used for reference. The circuit may include a pair of switches (e.g. MOSFET transistors) **Q1** and **Q2**, with **Q1** coupled between **Vin** and the central point, and **Q2** coupled between the common terminal and central point. The circuit may further include inductor **L** coupled between the **Vout** terminals and the central point. By staggering the switching of switches **Q1** and **Q2**, the circuit may convert the input voltage Vin to output voltage Vout. If current is input to the circuit by the **Vin** and **common** terminals, and the voltage drop across capacitors **Cin** and **Cout** stay about constant at voltages Vin and Vout respectively, the currents input to the circuit are combined at inductor L to form an inductor current which is about equal to the sum of the current input at the Vin and common terminals. The inductor current may contain a ripple due to the charging and discharging of capacitors **Cin** and **Cout,** but the voltage ripples over the capacitors are generally small, and similarly the inductor current ripple may be generally small. The inductor current may be output by the pair of output terminals Vout. In some embodiments, more than two Vout terminals may be utilized to split the output current into more than two portions. In some embodiments, a single output terminal may be included, and system designers may split the output terminal externally (i.e. outside of the PV power device circuit), if desired. The switching of switches **Q1** and **Q2** may be controlled by an external control device (not explicitly depicted). If the electrical terminals **Vin, common** and **Vout** are arranged as depicted in Fig. 3A, power device 302a may be used as the power device in configurations such as those shown in Fig. 1A-1D (e.g. device 102).

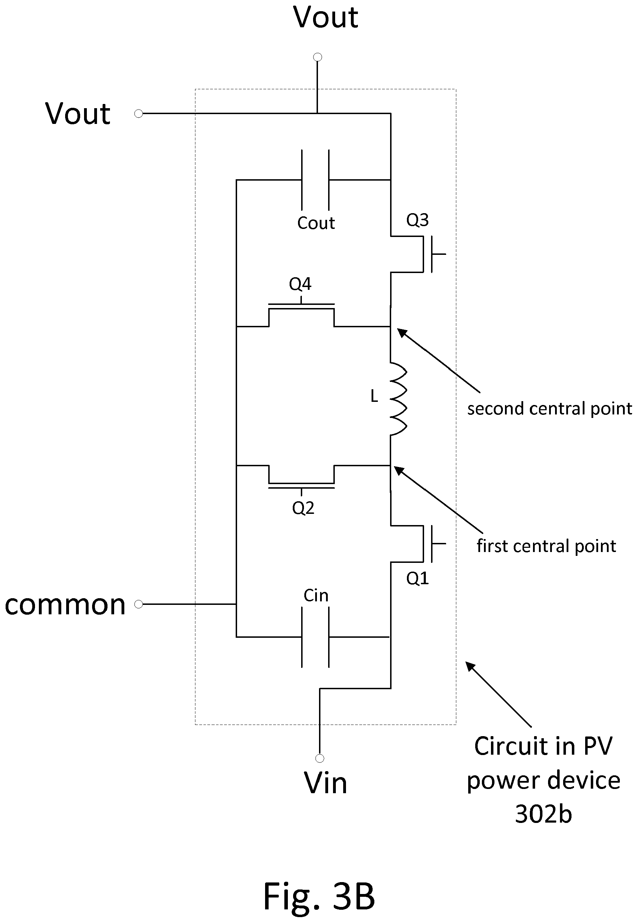

Reference is now made to FIG. 3B, which shows some of the internal circuitry of a photovoltaic power device according to one illustrative embodiment. In some embodiments, photovoltaic power device 302b may be implemented using a variation of a Buck+Boost DC/DC converter. The power device may include a circuit having two input terminals, denoted **Vin** and **common,** and two output terminals which output the same voltage **Vout.** The output voltage is in relation to the common terminal. The circuit may include an input capacitor **Cin** coupled between the common terminal and the **Vin** terminal, an output capacitor coupled between the common terminal and the **Vout** terminals. The circuit may include two central points used for reference. The circuit may include a plurality of switches (e.g. MOSFET transistors) **Q1**, **Q2, Q3** and **Q4** with **Q1** connected between **Vin** and the first central point, and **Q2** connected between the common terminal and the first central point. **Q3** may be connected between the **Vout** terminal and the second central point, and **Q4** may be connected between the common terminal and the second central point. The circuit may further include inductor L coupled between the two central points.

The operation of the Buck+Boost DC/DC converter in PV power device 302b may be variously configured. If an output voltage lower than he input voltage is desired, **Q3** may be statically ON, **Q4** may be statically OFF, and with **Q1** and **Q2** being PWM-switched in a complementary manner to one another, the circuit is temporarily equivalent to the Buck converter depicted in Fig. 3A and the input voltage is bucked. If an output voltage higher than he input voltage is desired, **Q1** may be statically ON, **Q2** may be statically OFF, and with **Q3** and **Q4** being PWM-switched in a complementary manner to one another, the input voltage is boosted. Staggering the switching of switches **Q1** and **Q2,** the circuit may convert the input voltage Vin to output voltage Vout. If current is input to the circuit by the Vin and common terminals, and the voltage drop across capacitors **Cin** and **Cout** are about constant voltages Vin and Vout respectively, the currents input to the circuit are combined at inductor **L** to form an inductor current which is equal to the sum of the current input at the Vin and common terminals. The inductor current may contain a ripple due to the charging and discharging of capacitors **Cin** and **Cout,** but if the voltage drop across capacitors **Cin** and **Cout** are about constant, the voltage ripples over the capacitors are small, and similarly the inductor current ripple may be small. The inductor current may be output by the pair of output terminals **Vout.** In some embodiments, more than two **Vout** terminals may be utilized to split the output current into more than two portions. In some embodiments, a single output terminal may be included, and system designers may split the output terminal externally (i.e. outside of the PV power device circuit), if desired.

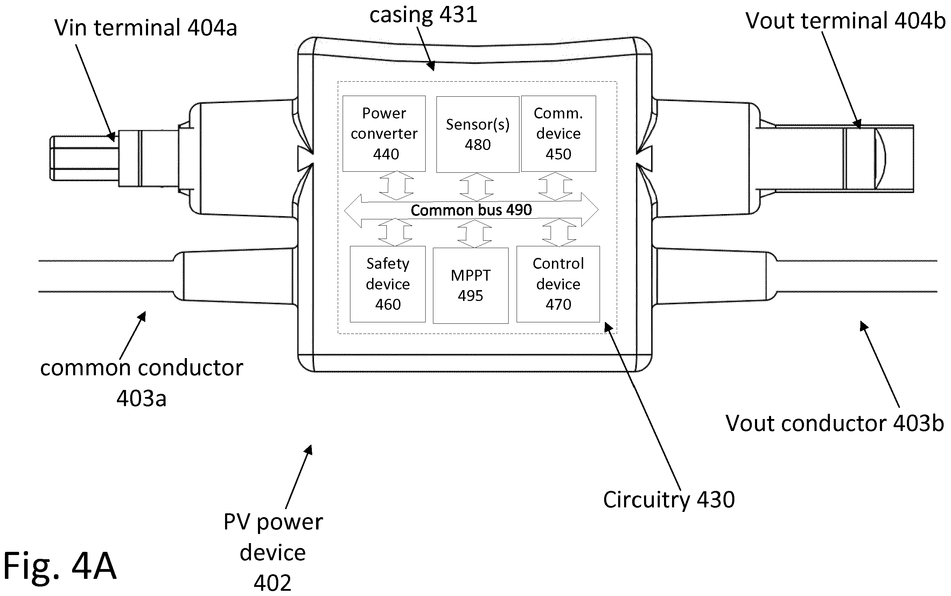

Reference is now made to Fig. 4A, which illustrates a photovoltaic power device according to illustrative embodiments. Photovoltaic power device 402 may include a casing 431. The casing 431 may house circuitry 430 (illustrated functionally). In some embodiments, circuitry 430 may include power converter 440. Power converter 440 may include a direct current-direct current (DC/DC) converter such as a buck, boost, buck+boost, flyback, Cuk and/or forward converter. In some embodiments, power converter 440 may include a direct current - alternating current (DC/AC) converter (e.g., an inverter, or a micro-inverter designed to convert a small portion of power from DC to AC, such as a 300W micro-inverter) instead of, or in addition to, a DC/DC converter.

In some embodiments, circuitry 430 may include Maximum Power Point Tracking (MPPT) circuit 495, configured to extract increased power from the PV generator the power device is coupled to. In some embodiments, MPPT circuit 495 may be configured extract increased power from a PV generator connected to its input terminal, and in some embodiments, MPPT circuit 495 may be configured extract increased power from a PV generator connected to its output terminal(s). In some embodiments, power converter 440 may include MPPT functionality, rendering MPPT circuit 495 unnecessary. Circuitry 430 may further comprise control device 470 such as a microprocessor, Digital Signal Processor (DSP) and/or an FPGA. Control device 470 may control and/or communicate with other elements of circuitry 430 over common bus 490. In some embodiments, circuitry 430 may include circuitry and/or sensors/sensor interfaces 480 configured to measure parameters directly or receive measured parameters from connected sensors on or near the photovoltaic generator, such as the voltage and/or current output by the module, the power output by the module, the irradiance received by the module and/or the temperature on or near the module. In some embodiments, circuitry 430 may include communication device 450, configured to transmit and/or receive data and/or commands to/from other devices. Communication device 450 may communicate using Power Line Communication (PLC) technology, acoustic communications technologies, or wireless technologies such as Blue-Tooth™, ZigBee™, Wi-Fi™, cellular communication or other wireless methods.

In some embodiments, circuitry 430 may include safety devices 460 (e.g. fuses, circuit breakers and Residual Current Detectors). For example, fuses may be connected in series with some or all of conductors 403a 403b, and terminals 404a and 404b, with the fuses designed to melt and disconnect circuitry at certain currents. As another example, PV power device 402 may include a circuit breaker, with control device 470 configured to activate the circuit breaker and disconnect PV power device 402 from a PV string or a PV generator in response to detecting a potentially unsafe condition or upon receiving a command (e.g. via communication device 450) from a system control device. As yet another example, PV power device 402 may include a bypass circuit featuring a switch, with control device 470 configured to activate the bypass circuit and short-circuit the input and/or output terminals of PV power device 402 in response to detecting a potentially unsafe condition or upon receiving a command (e.g. via communication device 450) from a system control device.

The various components of circuitry 430 may communicate and/or share data over common bus 490.

Input voltage (Vin) terminal 404a may be configured to be coupled to the positive output of a photovoltaic generator (e.g. as in Figs. 1A-1D). Output voltage (Vout) terminal 404b may be configured to be coupled to the negative output of a different photovoltaic generator, as described with regard to some of the embodiments herein (e.g. as in Figs. 1A-1D). In some configurations, Common conductor 403a and output voltage (Vout) conductor 403b may be coupled to other photovoltaic power devices.

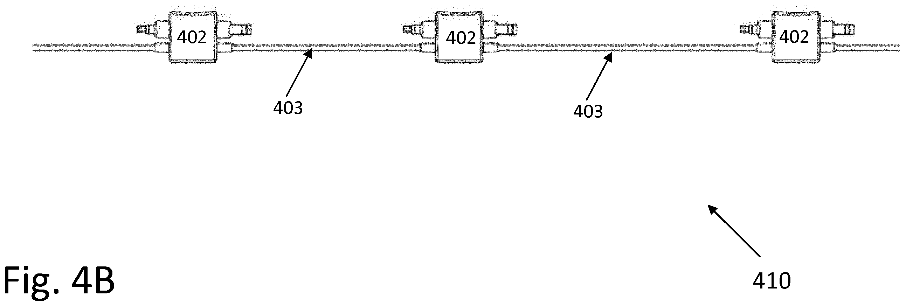

In some embodiments, conductors 403a and 403b may be integrated to photovoltaic power devices at each end, at the time of manufacturing, creating a string of connected photovoltaic power devices as depicted in Fig. 4B, allowing a plurality of coupled power devices to be manufactured and sold as a single unit for fast and easy field deployment. The length of the conductors (e.g. 403a, 403b) between adjacent power devices may be selected according to a length (or width) of a photovoltaic generator, to enable connecting adjacent power devices to adjacent photovoltaic generators. Manufacturing a string of power devices as a single unit, with the power devices interconnected using integrated (e.g. pre-connected) conductors 403 may provide additional advantages such as reduced cost (e.g. by saving the cost of two connectors. For example, PV power device 402 is depicted in Fig. 4A having two connectors and two conductors, and if the conductors 403a, 403b do not connect PV power device 402 to an adjacent power device, an additional two connectors may be required) and a lower risk of electrical arcing or overheating due to a faulty connection between connectors. In some embodiments, PV power device 402 may feature an integrated conductor 403a, with conductor 403b replaced by a terminal for connecting to an integrated conductor from a different PV power device. In some embodiments, conductors 403a and 403b may be replaced by terminals (e.g. MC4™ connectors made by Multi-Contact or other equivalent connectors) similar to 404a and 404b, to allow an installer to insert a cable of his or her choosing to be deployed. Terminals 404a and 404b and conductors 403a and 403b may be coupled to the terminals of DC/DC or DC/AC power converter 440. For example, power converter 440 may include a Buck converter similar to the converter depicted in Fig. 3a. In that case, Vin terminal 404a of Fig. 4A may be coupled to the corresponding Vin terminal of Fig. 3a, Vout terminal 404b and Vout conductor 403b of Fig. 4A may be coupled to the Vout terminals of Fig. 3a, and the common conductor 403a of Fig. 4A may be coupled to the common terminal of Fig. 3a. For visual clarity, these connections are not depicted explicitly, and in some embodiments the connections may differ.

Reference is now made to Fig. 4B, which shows a portion of a string of PV power devices. String 405 may be part of a string of PV power devices 402 (e.g. devices similar to or the same as PV power device 402 of Fig. 4A) connected to each other via conductors 403 which may be the same as or similar to common conductor 403a of Fig. 4A. The length of each conductor 403 may be about the same as the length a dimension of a PV generator, to enable each PV power devices to be coupled to more than one PV generator (as depicted in Fig. 2A) and/or to enable coupling adjacent PV power devices to adjacent PV generators in a series string. In some embodiments, string 405 may be manufactured and/or packaged, stored and sold as a single unit, enabling fast and easy deployment in a PV installation.

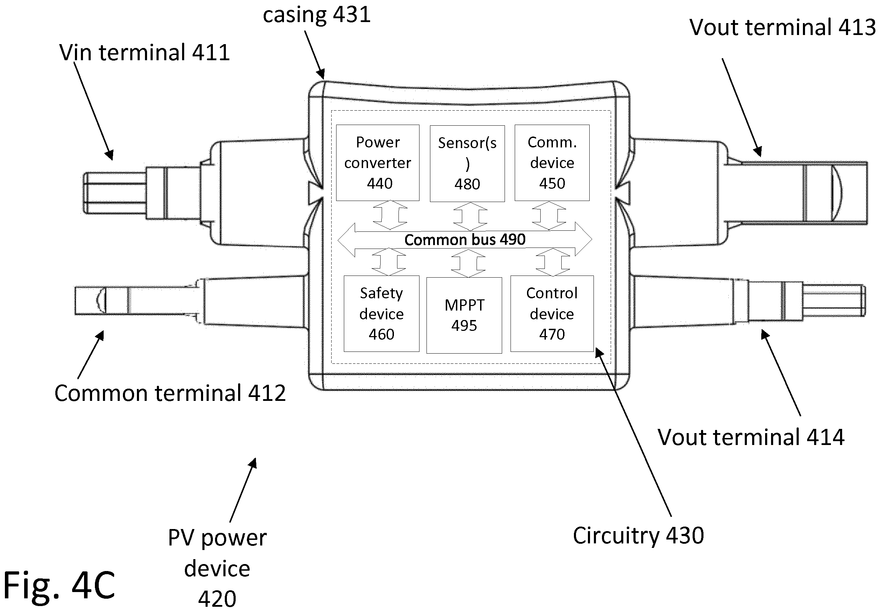

Reference is now made to Fig. 4C, which illustrates a photovoltaic power device according to illustrative embodiments. First photovoltaic power device 420 may include a casing 431 and circuitry 430 (illustrated functionally). Circuitry 430 may comprise circuits and devices similar to or the same as circuitry 430 as described with regard to Fig. 4A. PV power device 420 may comprise input voltage (Vin) terminal 411, common terminal 412, output voltage (Vout) terminal 413 and output voltage (Vout) terminal 414. Input voltage terminal 411 may be provided for coupling (e.g. connecting) to a first output terminal (e.g. a positive output terminal) of a first photovoltaic generator. Output voltage terminal 413 may be provided for coupling (e.g. connecting) to a second output terminal (e.g. a negative output terminal) of a second photovoltaic generator. Common terminal 412 may be provided for coupling to an output voltage terminal (e.g. similar to or the same as output terminal 414), provided by a second PV power device similar to or the same as PV power device 420. Output voltage terminal 414 may be provided for coupling to a common terminal (e.g. similar to or the same as common terminal 412) provided by a third PV power device similar to or the same as PV power device 420.

In some embodiments, such as embodiments similar to or the same as Fig. 4A, a first conductor couples (e.g. connects) common terminal 412 to an output voltage terminal of the second PV power device, and a second conductor couples (e.g. connects) output voltage terminal 414 to the common terminal of the third PV power device. In some embodiments, the first and second conductors connect the first, second and third power devices at the time of manufacturing, with the first, second and third power devices along with the first and second conductors provided as a single connected apparatus or part of a single connected apparatus. In some embodiments, the first and second conductors are not provided along with PV power device 420, and are connected during installation of PV power device 420.

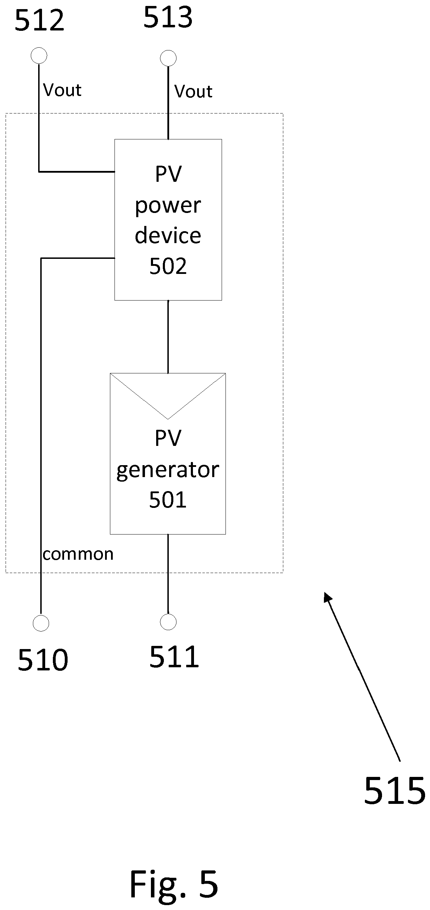

Reference is now made to Fig. 5, which illustrates an integrated illustrative embodiment. Integrated apparatus 515 may include a photovoltaic generator **501** (e.g., 101, 201 etc.) coupled to a PV power device **502** (e.g., 102, 202, 402a, 402b etc.). Some embodiments may employ the cabling method described herein to couple PV generator 501 to PV power device 502. PV power device 502 may further comprise circuitry similar to or the same as circuitry 430 of Fig. 4A. For example, PV power device 502 may comprise control device 470 such as a microprocessor, Digital Signal Processor (DSP) and/or an FPGA. PV power device 502 may include Maximum Power Point Tracking (MPPT) circuit 495, configured to extract maximum power from the PV generator the power device is coupled to. In some embodiments, control device 470 may include MPPT functionality, rendering MPPT circuit 495 unnecessary. Control device 470 may control and/or communicate with other elements of PV power device 502 over common bus 490. In some embodiments, PV power device 502 may include circuitry and/or sensors/sensor interfaces 480 configured to measure parameters on or near the photovoltaic generator 501 or PV power device 502, voltage, current, power, irradiance and/or temperature. In some embodiments, PV power device 502 may include communication device 450, configured to transmit and/or receive data and/or commands from other devices. Communication device 450 may communicate using Power Line Communication (PLC) technology, or wireless technologies such as Zig-Bee, Wi-Fi, cellular communication or other wireless methods. In some embodiments, integrated apparatus 515 and/or PV power device 502 may include safety devices 460 (e.g. fuses, circuit breakers and Residual Current Detectors). The various components of PV power device 502 may communicate and/or share data over common bus 490. Integrated apparatus 515 may feature four terminals which are accessible from outside the apparatus, at least two of which output the same voltage. The components of integrated apparatus 515 may be similar to or the same as those of circuitry 430 of Fig. 4A. In Fig. 5 the two terminals outputting the same voltage are denoted **512** and **513**. The integrated apparatus may be formed by embedding the components into a photovoltaic generator, the casing of the photovoltaic generator or mounting the components onto the photovoltaic generator. The integrated apparatus may include a portion of or all the circuitry required to comprise a "building block" that may be used for simple "plug 'n play" construction of optimized photovoltaic string. In this manner, the advantages of the current splitting detailed herein may be realized in the internal integrated circuit layout, with one current path in the integrated circuit including a photovoltaic generator 501 (e.g. solar cell, panel or shingle) and another current path bypassing the module. Additional advantages of an implementation as an integrated circuit such as ease of connection, possible cost reduction, etc. may also be realized.

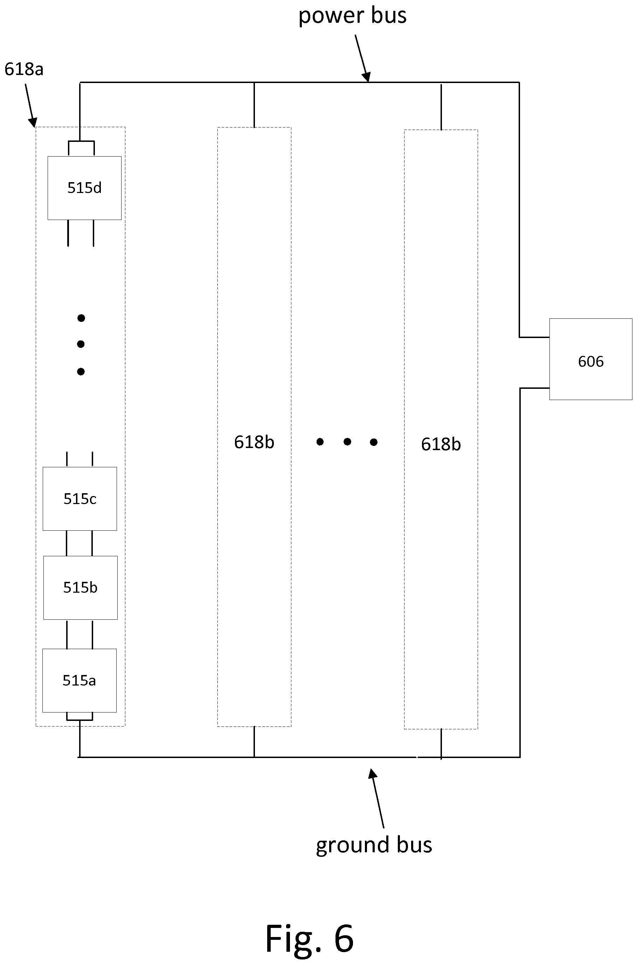

Reference is now made to Fig. 6, which shows a photovoltaic system according to another illustrative embodiment. A number of photovoltaic strings **618** (e.g. 618a, 618b) may be coupled in parallel between ground and power buses to provide power to the power bus. The power and ground buses may be coupled to the inputs of system power device 606. In some embodiments, system power device 606 may include a DC/AC inverter and may output AC power to the grid, home or other destinations. In some embodiments, system power device 606 may comprise a combiner box, transformer and/or safety disconnect circuit. One or more photovoltaic strings **618** may comprise a plurality of series-coupled integrated apparatuses **515**. In a string **618,** one apparatus 515 may have its terminals **510, 511** coupled to the ground bus. The other apparatuses **515** in the string may have their terminals **510, 511** coupled to the terminals **512, 513** of the preceding apparatuses **515** in the string. One apparatus 515 may have its terminals **512, 513** coupled to the power bus. The other apparatuses **515** in the string may their terminals **512, 513** coupled to terminals **510, 511** of the next apparatus 515 in the string. A photovoltaic system constructed in this manner may enjoy the benefits of optimized photovoltaic strings, multiple current paths which enable cheaper cabling, fully integrated components including safety, monitoring and control functions, and simple installation.

In some photovoltaic systems, it may be beneficial to couple devices outputting a voltage which is not strictly AC or DC. For example, PV power devices (e.g. devices comprising circuitry similar to circuitry 430 of Fig. 4A) may be configured to output a voltage waveform similar to a rectified sine wave, a triangle wave or a square wave. In some systems, configuring each PV power device to output a signal other than DC may reduce the size and cost of the filters and switching circuits required of a system power device configured to supply AC power to a grid or home (e.g. a DC/AC inverter).

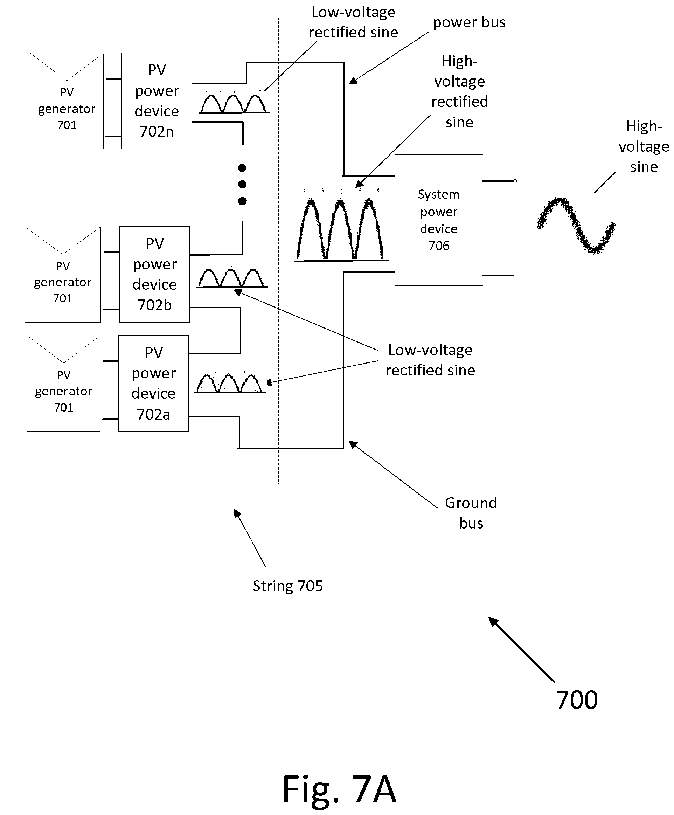

Reference is now made to Fig. 7A, which shows a photovoltaic system according to another illustrative embodiment in which benefit may be derived by rerouting current portions within a photovoltaic string. System 700 may comprise one or more photovoltaic strings 705 coupled to one another in parallel (only one string is illustrated). Each string may comprise a plurality of PV generators 701 (e.g. 701a, 701b etc.) and PV power devices 702 (e.g. 702a, 702b, etc.). In the embodiment depicted in Fig. 7A, the outputs of each PV generator 701 are coupled across the inputs of a power device 702, and the outputs of the PV power devices are serially coupled to one another to form a photovoltaic serial string. The inputs of each PV power device may receive power from a PV generator, and the outputs of the PV power device deliver power to string 705.

Each power device 702 may include circuitry similar to or the same as circuitry 430 of Fig. 4A. For example, each power device 702 may include a DC/DC converter configured to output a time-varying DC signal which emulates a rectified sine wave, triangular wave, square wave or other wave form which may be later processed and converted to a sine wave. The different power devices may output signals which are identical to one another, or different in shape, magnitude and/or phase. The outputs of the power devices may be summed to form a string voltage signal which is input to system power device 706.

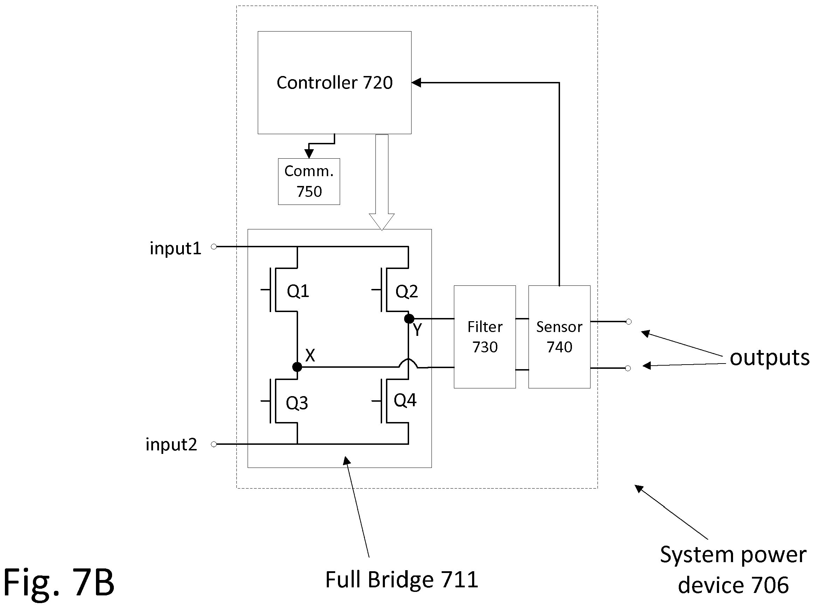

System power device 706 may be configured to receive the string voltage input and output an alternating current (AC) signal such as a sine wave, which may be fed to the grid or home. In the illustrative embodiment depicted in Fig. 7A, each power device 702 outputs a low-voltage rectified sine wave which is synchronized to be in-phase with the rectified sine waves output by the other power devices in the same string. Synchronization may be achieved by a master control device (e.g. a controller 720 and communication device 750 of system power device 706, as depicted in Fig. 7B) commanding the PV power devices to produce a voltage of a certain waveform, and at a certain phase. The synchronized, rectified sine waves may be of a low frequency such as 100Hz or 120Hz, and may be summed to form a higher-voltage, rectified sine wave of amplitude about that of the utility grid voltage, such as 311[V] in European systems or 156[V] in the USA.

The voltage output by each power device 702 may be substantially lower than a utility grid voltage. The summed peak output voltages of each group of serially connected power devices 702 may be about the same as a utility grid peak voltage. For example, a string of ten serially connected power devices 702 may have a total peak voltage of about 311V, and the output voltage of each of the ten power devices 702 may output, on average, about 31V.

System power device 706 may configure the output voltage to be appropriate for feeding the grid, home or storage devices. For example, if the string voltage signal is a rectified sine wave of grid-voltage amplitude, system power device 706 may comprise a full-bridge to converter the rectified sine wave to an alternating sine wave. In some embodiments, the string voltage amplitude may be different from grid voltage amplitude, and may be adjusted by circuits and/or devices such as a transformer. In some embodiments, the string voltage may be similar to a triangular or square wave, and filtering may be applied before or after converting the signal from time-varying-DC to AC.

In some embodiments, a plurality of strings 705 may be connected in parallel at the input of system power device 706. Each string 705 may be connected to system power device 706 via a switch (not explicitly shown), the switch being operable to disconnect a string 705 (e.g., an individual string 705 without disconnecting other strings 705) in response to a failure occurring at or in the disconnected string 705 and/or a failure to provide adequate or synchronized power to system power device 706.

In some embodiments, system power device 706 may regulate the voltage across string 705. For example, system power device 706 may set the peak string voltage to a substantially constant value (e.g. a rectified sine voltage signal with a peak value of 350V), with the string current varying according to power available from PV generators 701. The substantially constant peak voltage value may be changed periodically according to operational considerations such as the efficiency of system power device 706 at different input voltages and currents, according to available power, or as part of a safety-response protocol.

In some embodiments, system power device 706 may regulate the current flowing through string 705. For example, system power device 706 may set the string current to a substantially constant value with the string voltage amplitude varying according to power available from PV generators 701. The substantially constant current value may be changed periodically according to operational considerations such as the efficiency of system power device 706 at different input voltages and currents, according to available power, or as part of a safety-response protocol.

Reference is now made to Fig. 7B, which shows a system power device 706 according to illustrative embodiments. System power device 706 may include full bridge 711, controller 720, filter 730 and sensor 740. System power device 706 may further include additional components such as communication device(s), sensor(s) /sensor interfaces, safety and/or disconnect devices(s), monitoring device(s) and/or auxiliary power circuit(s) (not explicitly depicted) similar to or the same as the components of circuitry 430 of Fig. 4A. Full bridge 711 may comprise four switches (e.g. MOSFETs) Q1, Q2, Q3 and Q4, two inputs and two outputs. Q1 may be connected between input1 and X. Q2 may be connected between input1 and Y. Q3 may be connected between input2 and X. Q4 may be connected between input2 and Y.

When switches Q1 and Q4 are ON and switches Q2 and Q3 are OFF, the output terminals may output a signal which is an inversion of the input signal. When switches Q1 and Q4 are OFF and switches Q2 and Q3 are ON, the output terminals may output a signal which is identical to the input signal. If the input signal is a rectified sine wave such as the string voltage of system 700 of Fig. 7A, by inverting every second lobe of the rectified sine wave, an alternating sine wave may be obtained. The switching of the switches Q1-Q4 may be controlled by controller 720. For example, the controller may apply a PWM signal to turn switches Q1 and Q4 OFF and switches Q2 and Q3 ON for the duration of one positive sine lobe, and then reverse the signals (i.e. turn Q1 and Q4 ON and switches Q2 and Q3 OFF) to invert the next sine lobe. Controller 720 may include a microprocessor, Digital Signal Processor (DSP), ASIC, and/or an FPGA. System power device 706 may include filter 730 which may be placed on either the input or output side of the device, to filter higher-order harmonics which may be present in the processed signal. 701An appropriate filter (e.g. a low-pass LC filter) may reduce higher-order harmonics, creating an output signal which more closely resembles a pure sine wave.

Sensor 740 may comprise a voltage-sensor for measuring the voltage output by system power device 706. In some embodiments, the output of system power device 706 is coupled to a utility grid, and sensor 740 may further measure the grid voltage. Sensor 740 may provide output voltage measurements to controller 720, with controller switching switches Q1-Q4 responsively to the measurements provided by sensor 740. For example, when sensor 740 measures an output voltage of negative polarity, sensor 740 may provide the negative voltage measurements to controller 720, and controller 720 may responsively switch Q1 and Q4 to the ON state and switches Q2 and Q3 to the OFF state. Communication device 750 may be configured to communicate with communication devices deployed in PV power devices, for example, communication devices similar to or the same as communication device 450 of Fig. 4A. For example, if communication device 450 includes a Power Line Communication transceiver, communication device 750 may similarly be a PLC transceiver. If communication device 450 includes a wireless transceiver, communication device 750 may similarly be a wireless transceiver. Communication device 750 may transmit voltage magnitude measurements to PV power devices 702 of Fig. 7A, with each PV power device 702 configured to output a voltage corresponding to the magnitude measurements.

As a numerical example, when sensor 740 measures an output voltage of 100V, communication device 750 may transmit the measurement of 100[V] to PV power devices 702, with each PV power device 702 adjusting its duty cycle to output $100/N$ [V], where N is the number of serially-connected PV power devices 702. In some embodiments, the total voltage of 100[V] may be split unevenly amongst PV power devices 702, with each PV power device 702 outputting a voltage proportional to the power processed by the respective PV power device, and the total voltage output by all of PV power devices 702 equaling 100[V].

In some illustrative embodiments, two or more system power devices 706 may be deployed in parallel in system 700, reducing the risk of system failure in case of a failure in a single device. While component redundancy often significantly increases system cost, the architecture of system 700 may enable system power device 706 to be implemented using inexpensive circuitry (e.g. low frequency switches Q1-Q4 and/or a controller 720 that does not need expensive processing capabilities), thereby decreasing the cost of adding redundant components to reduce the risk of system failure. By adding a backup system power device 706, system 700 may reduce the number of single points of failure or have no single point of failure, such that a failure of a single device does not cause the entire system to cease producing power. In some embodiments, certain components within system power device 706 may be duplicated for redundancy. For example, system 700 may comprise system power device 706 comprising a single controller 720, a single filter 730 and a single communication device 750, but multiple sensors 740 and full-bridges 711.

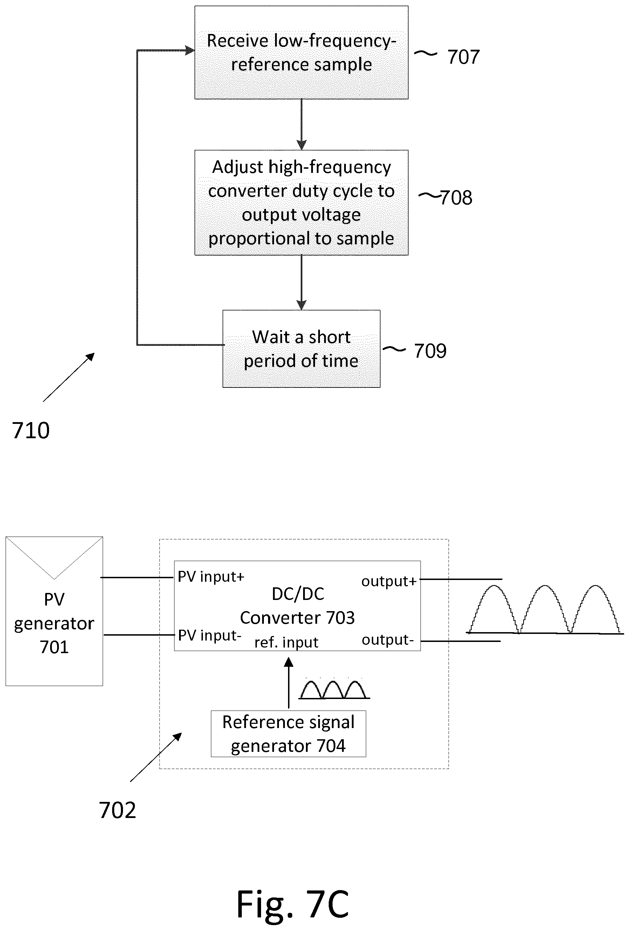

Reference is now made to Fig. 7C, which shows an illustrative embodiment of generating a pseudo-AC signal which varies over time, for example, a DC output that is varied in amplitude in a step-wise manner to emulate a biased or rectified alternating-current signal.

DC/DC converter 703 may receive an input from a DC voltage source such as PV generator 701. In alternative embodiments, PV generator 701 may be replaced in Figs. 7A and 7C by an alternating current (AC) power source (e.g. a wind turbine), PV power device 702 comprising an alternating current to direct current (AC/DC) rectifying circuit (not explicitly depicted) converting the AC input power to DC power to be input to DC/DC converter 703. Converter 703 may further receive a reference signal from reference signal generator 704, and may attempt to output a voltage signal which is proportional to the reference signal. For example, signal generator 704 may output a rectified sine wave reference with an amplitude of 100mV, and converter 703 may output a rectified sine which tracks the reference, but with a different amplitude. If converter 703 operates at a frequency significantly higher than the frequency of the reference signal, the tracking can be highly accurate for any reference waveform. For example, the reference signal may be of a low frequency such as 100Hz or 120Hz, and the DC/DC converter may operate at a frequency of tens or hundreds of kHz. The converter's high frequency may allow it to stabilize an output voltage rapidly, within a timeframe that is a small fraction of the period of the reference signal.

Reference signal generator 704 may be implemented in various manners. In some embodiments, digital samples may be stored on a memory device (e.g. Read Only Memory (ROM) Random Access Memory (RAM), Flash memory or similar memory devices) coupled to DC/DC converter 703, with a digital sample provided to DC/DC converter 703 at regular intervals. In some embodiments, reference signal generator 704 may comprise an analog oscillator and an analog-to-digital (A/D) converter configured to sample the oscillator and provide a digital sample to DC/DC converter 703. In some embodiments, reference signal generator 704 may be a communication device for receiving reference samples from a different communication device (e.g. communication device 750 of Fig. 7B, transmitting samples measured by sensor 740) and providing them the DC/DC converter 703.

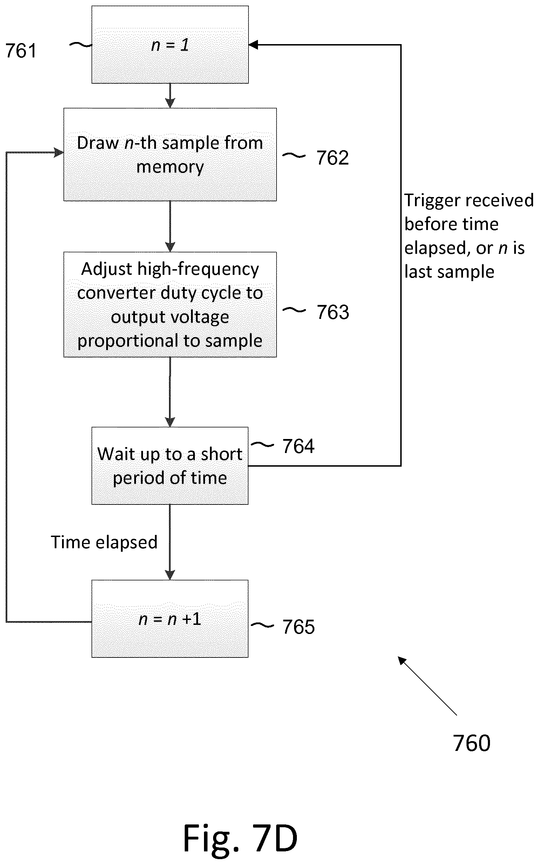

Still referring to Fig. 7, DC-DC converter 703 may carry out method 710. At step 707, the DC/DC converter may digitally sample the reference signals. At step 708, the DC/DC converter may adjust the duty cycle of its high-frequency switching components to output a voltage which is proportional (according to a predefined ratio) to the reference signal. At step 709, the converter may wait a short time before the next sample is processed. In some embodiments, the short time is predetermined (e.g. the converter may draw a new reference sample from memory or sample an oscillating reference signal after a period of time such as about 10 microseconds or about 100 microseconds). In some embodiments, the method will wait until a new sample is received from an external device, in which case the short time is not predetermined by the converter. In the illustrative embodiment depicted in Fig. 7C, the reference signal is a rectified sine, and the converter output is a rectified sine of a different amplitude. The higher the frequency, the "smoother" the output signal may be (e.g. because the output voltage would be adjusted in smaller time-interval steps).

In illustrative systems such as system 700, it may be desirable for photovoltaic power devices 702 to be configured to output voltage and current signals shaped similarly to one another, to maintain a system power factor close to one. For example, if the voltage signal output by a PV power device is shaped as a triangular wave, to maintain a power factor equal to one the current output may be a triangular wave proportional to the triangular voltage wave (i.e. of the same frequency, and with no phase shift between the two signals). In some embodiments, the output voltage or current is imposed on the power device outputs, requiring the converter device to configure either the voltage or the current to match the imposed signal. Illustrative embodiments may include, but are not limited to, systems comprising PV power devices configured output in-phase voltage and current waveforms, to obtain a power factor close or equal to unity.

Synchronization of PV power devices to output in-phase voltage and current waveforms may be achieved is several ways. In some embodiments, synchronization may be achieved by providing each DC/DC converter with the same reference sample at the same time. For example, communication device 750 of Fig. 7B may transmit a reference sample to an entire string of serially-connected DC/DC converters at the same time, with each DC/DC converter receiving the sample at about the same time and outputting a voltage derived from the same reference sample. In some embodiments, each DC/DC converter may store (e.g. in a memory device) a group of digital samples to be processed in order according to predetermined time intervals, with a trigger received from an external device signaling each converter to restart processing from the first sample.

In some embodiments, DC/DC converter 703 may include a bypass circuit (not explicitly shown) disposed between the DC/DC converter 703 output terminals (denoted **output+** and **output-** in Fig. 7C), and include a controller configured to activate the bypass circuit (e.g. to directly connect the **output+** terminal to the **output-** terminal) in response to a failure by the DC/DC converter to synchronize the converter output to other converter outputs, or in response to a different failure in the converter or in PV generator 701. In response to such failures (or bypassing) of a DC/DC converter 703 in a PV power device 702 (e.g. PV power device 702a of Fig. 7A), other serially-connected PV power devices 702 (e.g. PV power devices 702b-702n) may adjust (e.g. raise) their output voltages to compensate for the failed device.

Reference is now made to Fig. 7D, which shows a method for synchronizing waveforms according to aspects of the present disclosure. Method 760 may be carried out by one PV power device or a plurality of series or parallel connected PV power devices such as PV power devices 702. Each power device may include a memory device storing a sequence of output voltage reference samples. At step 761, the power device may initialize the counter $n$ to the first reference sample. At step 762, the n-th (at the initialization stage, the first) sample is drawn from memory, and at step 763 the power device adjusts the duty cycle of a high-frequency converter to output a voltage proportional to the n-th sample. At step 764, the method may wait up to a predetermined short period of time (e.g. 10 microseconds or 100 microseconds). If the time elapses, the method may increment $n$ at step 765 and loop back to step 762, where a new sample is drawn from memory. If a trigger is received before the predetermined time elapses, the method may loop back to step 761 and reset $n$ to equal 1.

In some embodiments, the trigger may be received from a system control device. For example, a group of serially connected PV power devices 702 may each hold in memory a sequence of 1000 samples corresponding to a single lobe of a rectified sine wave. System power device 706 may be configured to send a trigger via communication device 750 every 10 milliseconds (corresponding to a frequency of 100Hz), with each PV power device 702 receiving the trigger at about the same time. Upon reception of the trigger, each PV power device may output 0[V], corresponding to the first sample of a rectified sine wave. Each predetermined short period of time at step 764 may be $\frac{10ms}{1000 samples} = 10$ microseconds per sample. In some embodiments, each PV power device may be configured to set $n=1$ after the final sample is processed, even without receiving a trigger. The triggers may be used as a timing synchronization backup method, to ensure that the PV power devices are resynchronized at least once per cycle.

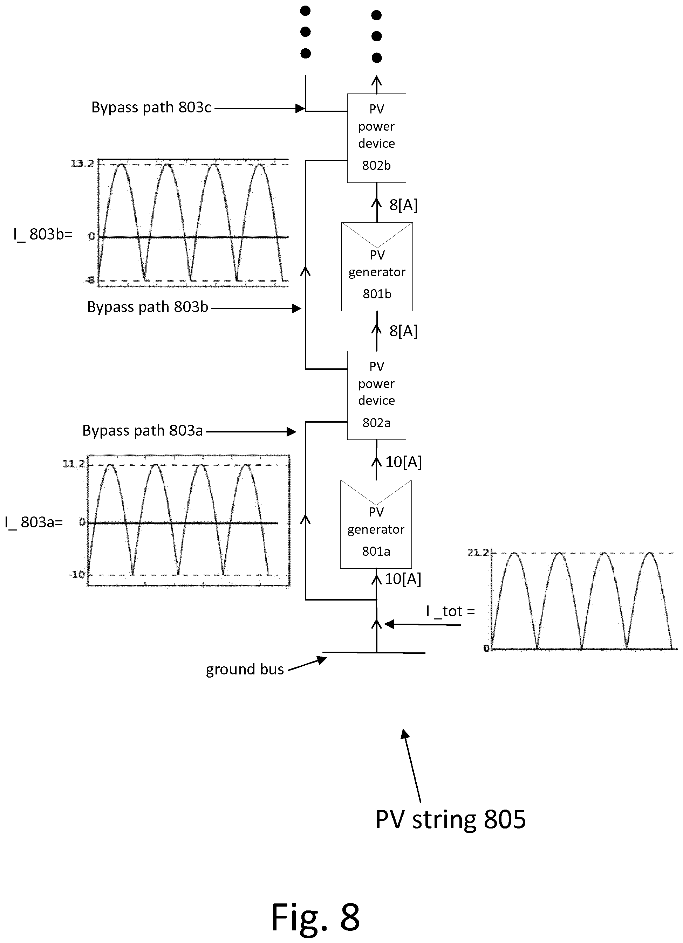

Reference is now made to Fig. 8, which shows how illustrative embodiments of conductor splitting techniques may be applied to illustrative systems such as system 700. Photovoltaic string 805 may be part of or the same as other photovoltaic strings disclosed herein, such as photovoltaic string 105 of Fig. 1A. Photovoltaic string 805 may comprise a plurality of photovoltaic generators (e.g. 801a, 801b etc.) and a plurality of photovoltaic power devices 802 (e.g. 802a, 802b etc.). The string current may be a DC current that is varied (e.g., step-wise adjusted), for example, a current of magnitude 15[A](RMS) shaped as a rectified sine wave with a peak amplitude of 21.2[A]. The string current may be divided into two portions, with a first DC portion being routed through photovoltaic generators 502, and a second AC portion being routed along a second route comprising bypass paths 803 (e.g. 803a, 803b etc.), bypassing the PV generators. The two portions may be joined at the bottom of the string by the ground bus, and at the top of the string by the power bus (not shown). By routing a DC portion of the string current through photovoltaic generators, the current flowing through the bypass paths may comprise biased rectified sine waves. The root-mean-square (RMS) of a biased rectified sine current is given by $I_{RMS} = \sqrt{\frac{A^2}{2} - \frac{4AB}{\pi} + B^2}$ where $A$ is the amplitude of the rectified sine wave (routed through bypass paths 803) and B is the DC current bias (routed through the PV generators). Similar formulae exist for other current waveforms such as triangular waves. The root-mean-square of an unbiased rectified sine current is given by $I_{RMS} = \frac{A}{\sqrt{2}}$ where $A$ is the amplitude of the rectified sine wave. It can be shown that careful selection of the bias B may reduce the RMS of the current flowing through the bypass paths significantly, possibly requiring thinner, cheaper cables compared to those that would be required to carry the entire, unbiased string current.

Selection of the bias B may include a calculation to minimize an RMS value of a current. For example, given a mathematical expression of an RMS current, the derivative of the expression may be calculated parametrically, and a $B$ selected to set the derivative to zero, corresponding to a minimum value. For example, given the RMS value of a rectified sine wave current signal

$$I_{RMS} = \sqrt{\frac{A^2}{2} - \frac{4AB}{\pi} + B^2},$$ the minimum value of

$I_{RMS}$ is calculated to be obtained for $B = \frac{2A}{\pi}$. In some embodiments, where the RMS value of a current may be difficult to calculate analytically, simulation may show various RMS values obtained when varying $B$, and an appropriate $B$ (e.g. to minimize the current RMS) may be selected.

In some embodiments, $B$ may be selected as to increase the power output by a photovoltaic generator, and A may be accordingly selected to minimize an RMS current value (e.g. by analytic methods or by simulation).

With appropriate selection of conductor sizes for the bypass paths, losses may also be reduced, as explained previously herein. In the illustrative embodiment discussed herein, PV generator 801a carries a DC current of 10[A], with the remainder of the string current, a rectified sine-wave bypassing PV generator 801a via bypass path 803a to PV power device 504a may be biased by 10[A]. PV generator 801b carries a DC current of 8[A], with the remainder of the string current, a 8[A]-biased rectified sine-wave bypassing module 502b via bypass path 803b. PV power devices 802 may comprise similar components and may utilize similar methods to the components and methods discussed herein with regard to power devices 702. The terminals and internal circuitry of power devices 702 may be configured to provide input, common and output voltages similarly to the configurations discussed herein with regard to power devices 102, 202, 302a, 302b, 112, 402, 420, and 502.

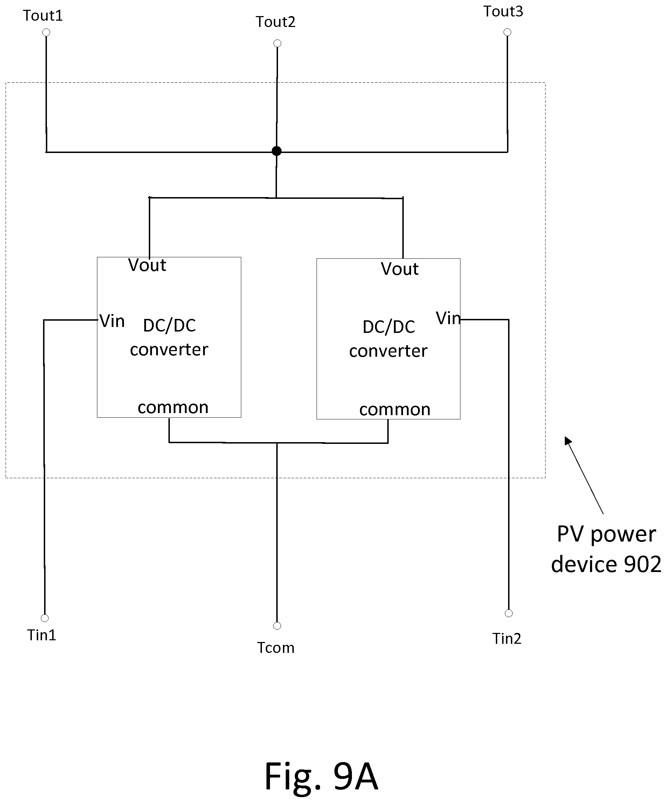

Reference is now made to Fig. 9A, which shows a photovoltaic power device according to illustrative embodiments. Power device 902 may comprise two DC/DC converters. Different types of DC/DC converters may be used, such as Buck, Boost, Buck+Boost, Flyback and/or Forward converters. In some embodiments, the power device may comprise two different types of converters. For example, one converter may be a Buck converter, and the other converter may be a Buck+Boost converter. The two converters may include, for example, 3 terminals: an input terminal, an output terminal and a common voltage terminal. Each converter's input terminal may be configured to be coupled to a separate set of one or more PV generators. For example, terminal **Tin1** may be coupled to the input of one DC/DC converter, and may be configured to be coupled to a first set of one or more PV generators. Terminal **Tin2** may be coupled to the input of the other DC/DC converter, and may be configured to be coupled to a second set of one or more PV generators. The converters' common terminals may be coupled to one another and made available via external terminal **Tcom.** The converters' output terminals may be coupled to one another, with the converters being configured to process the input voltages to allow matching and coupling of output voltages. The coupled output terminals may then be split into three externally available output terminals **Tout1, Tout2** and **Tout3,** with each terminal capable of carrying a portion of a total photovoltaic string current. In some embodiments, power device 902 may comprise more than two converters, may be coupled to more than two sets of photovoltaic generators, and may feature a different number of externally available terminals. In some embodiments, a plurality of photovoltaic power devices may be coupled to one another using conductors of predetermined length at the time of manufacturing, packaged and sold as a single unit, and deployed as a single unit when installing a photovoltaic system.

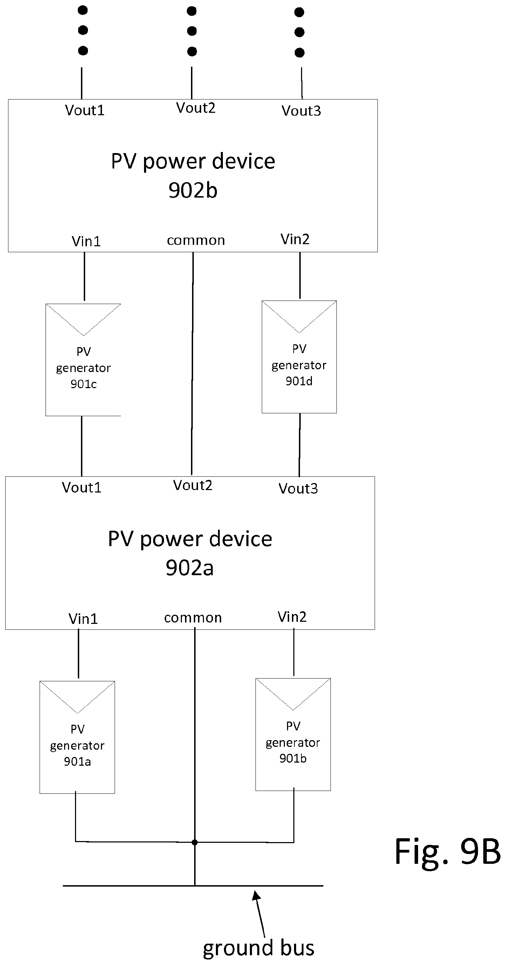

Reference is now made to Figure 9B, which shows a portion of a photovoltaic string according to illustrative embodiments. Photovoltaic generators 901a and 901b may have their negative output terminals coupled to the string ground bus, and have their positive output terminals coupled to the Vin1 and Vin2 terminals of PV power device 902a. PV power device 902a's common terminal may also be coupled to the ground bus. Output terminals **Vout1** and **Vout3** of power device 902a may be coupled to the negative output terminals of additional PV generators 901c and 901d, respectively. Power device 902a may be coupled to the next power device in the string, 902b, by coupling output terminal **Vout2** of device 902a to the common terminal of device 902b. Additional PV generators and power devices may be connected similar to the manner described herein to form a photovoltaic string. The three output terminals of the final power device in the string may be coupled to a power bus (not shown). Using the cabling scheme described herein allows the string current to be split along three paths, potentially reducing system losses and allowing cheaper conductors to be used for some of the conduction paths. The portion of the photovoltaic string illustrated in Fig. 9B may be included in photovoltaic installation 100 in place of string 105.

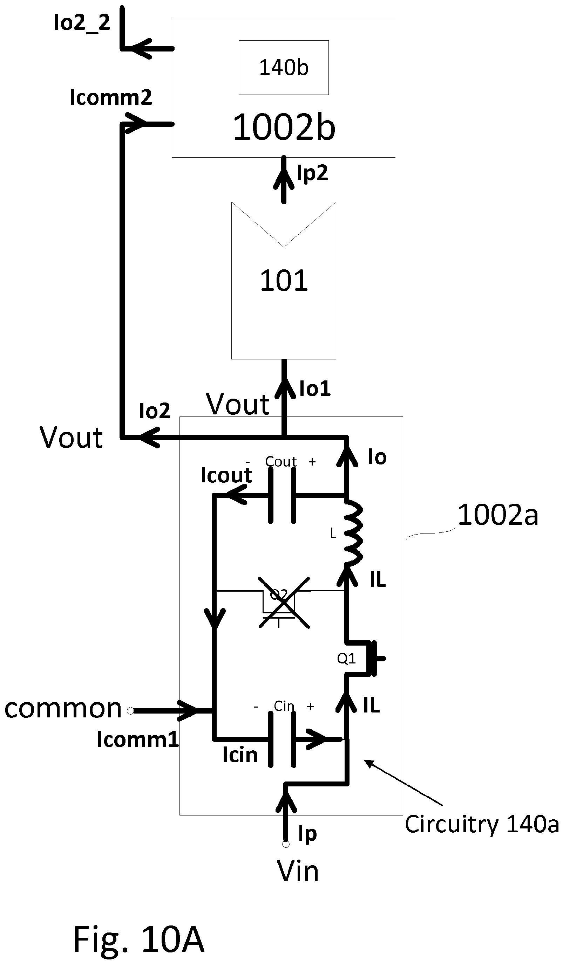

Reference is now made to FIG. 10A, which shows PV power device 1002a comprising circuitry 140a. PV power device may be the same as or similar to previously described photovoltaic power devices according to various illustrative embodiments (e.g., PV power device 102 of Figs. 1A-1D, PV power device 402 of Fig. 4A-4B, PV power device 502 of Fig. 5, etc.). Circuitry 140a may be similar to or the same as circuitry of Fig. 3A. Fig. 10A depicts the current flowing in the branches of circuitry 140a when switch **Q2** is OFF and **Q1** is ON. Current **Icomm1** flows into the circuitry from the common terminal and current **Ip** flows into the circuitry from the **Vin** terminal. Current **IL** flows through switch **Q1** and inductor **L,** and the current Io is split into two portions, **Io1** and **Io2,** which flow through the two **Vout** terminals, respectively. The currents **Icin** and **Icout** flow through the capacitors **Cin** and **Cout,** respectively. According to the denoted capacitor voltage polarities, **Cin** is discharging, and **Cout** is charging. The voltage drop across inductor **L** is about (i.e. assuming negligible voltage drop over switch Q1) Vout-Vin, which in this illustrative embodiment will be negative (since the circuitry comprises a buck converter), leading to a reduction in the current flowing through inductor **L.** According to Kirchoff's Current Law (KCL), the following relationships hold:

$$Icin = Icomm1 + Icout$$

$$IL = Ip + Icin$$

$$Icout = IL - Io$$

$$Io = Io1 + Io2.$$

Current **Io1** flows through a PV generator 101 and into PV power device 1002b comprising circuitry 140b, which may be similar to or the same as circuitry 140a. If no current leaks out of PV generator 101, then **Ip2 = Io1.** Similarly, **Io2 = Icomm2,** i.e. one of the output current portions of circuitry 140a becomes input current at the common terminal of PV power device circuitry 140b.

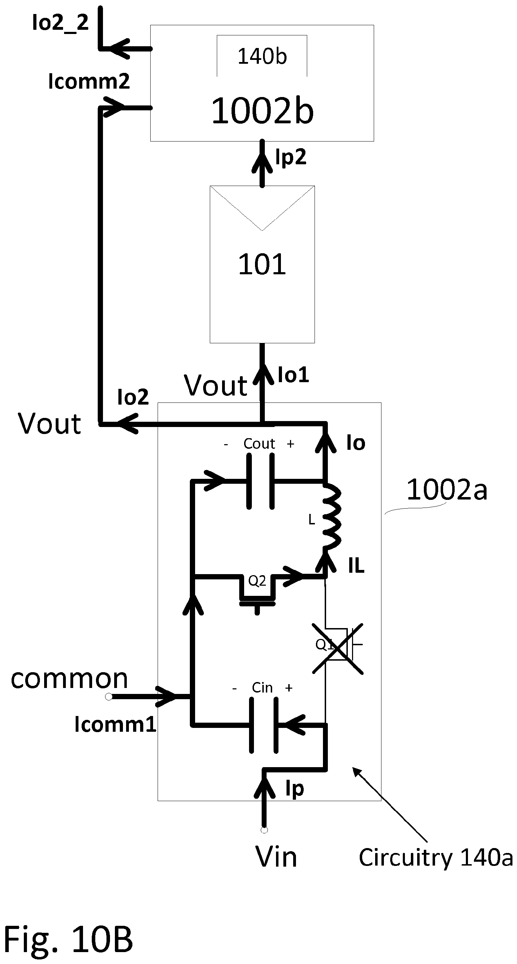

Reference is now made to FIG. 10B, which shows circuitry 140a when switch Q1 is OFF and switch Q2 is ON. According to the denoted capacitor voltage polarities, **Cin** is charging, and **Cout** is discharging. The voltage drop across inductor **L** is Vout, which is a positive quantity, leading to an increase in the current flowing through inductor **L**. The increase in inductor current when Q2 is ON compensates for the decrease in inductor current when Q2 is OFF, and the DC current flowing through inductor L is about constant under constant operating conditions (e.g. no change in the solar irradiance, the performance of the PV generators or in the load connected to the photovoltaic system).

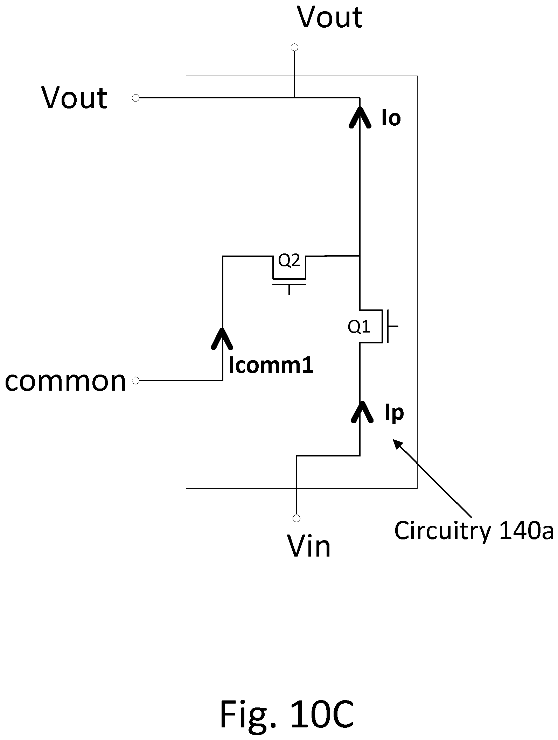

Reference is now made to Fig. 10C, which shows a DC-equivalent circuit of circuitry 140a according to the illustrative embodiments of Figs. 10A and 10B. The inductor **L** has been replaced with a short-circuit, and the capacitors **Cin** and **Cout** have been replaced by open circuits, in accordance with common practice when obtaining equivalent DC-models of electrical circuits. Under the operating condition where Q1 and Q2 are switched in opposing states (e.g., Q2 is off when Q1 is on, and Q2 is off when Q1 is on), **D** denotes the duty cycle of switch Q1, i.e. the relative portion of each switching cycle in which Q1 is ON (e.g. **D = 0.2** corresponds to **Q1** being ON %20 of the time, and **Q2** being on %80 of the time), then the DC current **Io** can be expressed as $I_o = D \cdot I_p + (1 - D) \cdot I_{comm1}$.

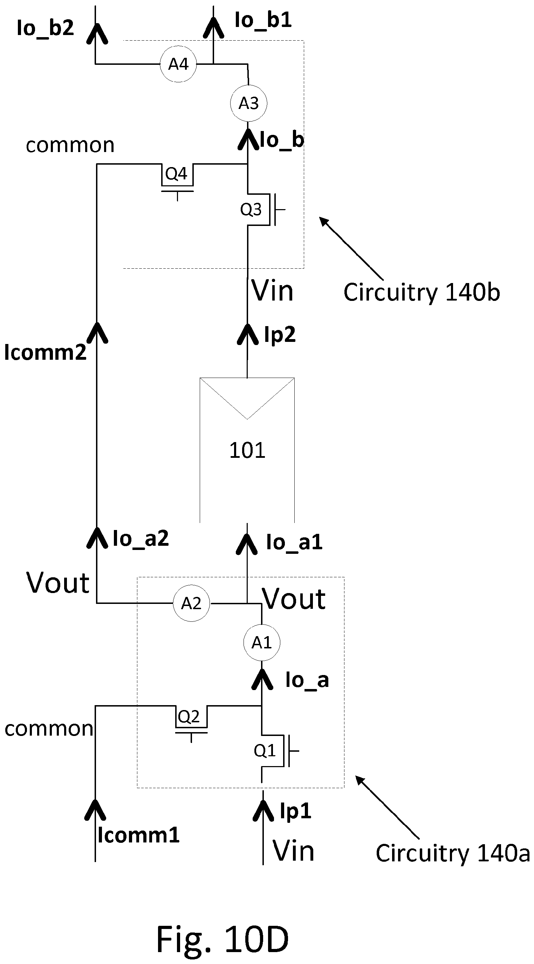

Reference is now made to Fig. 10D, which shows a DC-equivalent circuit of serially-connected circuitry 140a and 140b. Output current **Io_a1** of circuitry 140a is coupled (e.g. connected) to PV generator 101, with PV generator outputting current Ip2 to the Vin terminal of circuitry 140b. If little or no current leaks out of PV generator 101, then **Io_a1 ≈ Ip2**. Similarly, **Io_a2 = Icomm2**. Ammeters A1, A2, A3 and A4 may measure the DC components of currents **Io_a, Io_a2, Io_b** and Io_b2, respectively. Currents Io_a1 and Io_b1 may be readily computed by the results as **Io_b1 = Io_b - Io_b2,** and **Io_a1 = Io_a - Io_a2.** Ammeters A1 and A2 may be part of a power device (e.g. power device 402 of Fig. 4A) and may be coupled to a control device and to a communication device (e.g. control device 470 and communication device 450 of Fig. 4A, where circuitry 140a may be part of power converter 440). Similarly, ammeters A3 and A4 may be part of a different power device (e.g. a second power device 402 of Fig. 4A) coupled to a control device and may be to a communication device (e.g. control device 470 and communication device 450 of Fig. 4A, where circuitry 140b may be part of power converter 440).

Still referring to DC-analysis of the circuitry of Fig. 10D, the absence of electrical storage devices (and assuming no current leakage) leads to the equations Ip1 + Icomm1 = Io_a = Io_a1 + Io_a2 = Ip2 + Icomm2 = Io_b = Io_b1 + Io_b2. Switch Q4 is serially connected to ammeter A2. Similarly, switch Q3 is serially connected to PV generator 101, which carries current Io_a1. As mentioned above, Io_a1 is calculated as Io_a1 = Io_a - Io_a2, with Io_a and Io_a2 directly measured by ammeters A1 and A2, respectively. In some embodiments, Io_a1 may be directly measured, along with Io_a and/or Io_a2. If Io_a1 and one of either Io_a or Io_a2 are directly measured, then the unmeasured current may be calculated using the two measured currents.

Still referring to Fig. 10D, varying the duty cycles of switches Q3 and Q4 may affect the DC current measurements of ammeters A1 and A2. As a numerical example, if Io_b = Io_a = 15[A], and a duty cycle of D=0.5 is selected for the operation of switch Q4, then the equation $15A = I_{o\_b} = 0.5 \cdot I_{comm2} + 0.5 \cdot I_{p2}$ will hold. If the duty cycle is changed from 0.5 to 0.2, then the new equation will be $15A = I_{o\_b} = 0.2 \cdot I'_{comm2} + 0.8 \cdot I'_{p2}$. Therefore (unless, coincidentally, $I_{comm2} = I_{p2}$, but that condition can be easily avoided by selecting a duty cycle for switch Q1 which creates an inequality), $I'_{comm2} \neq I_{comm2}$ and $I'_{p2} \neq I_{p2}$ will hold, and varying the duty cycles of switches Q3 and Q4 of circuitry 140b may cause the DC current readings of ammeters A1 and A2 of circuitry 140a to change.

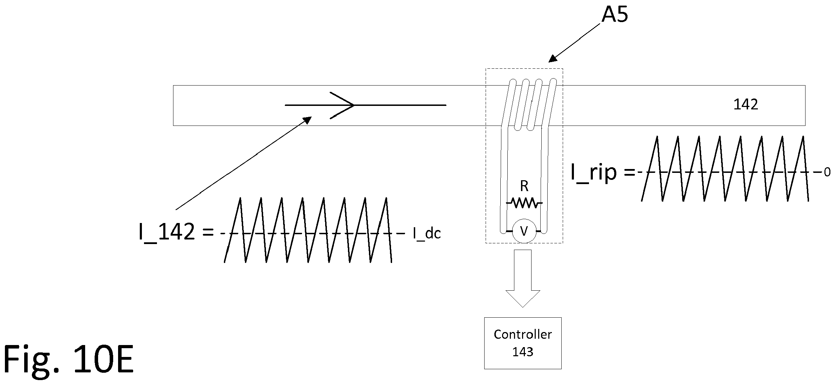

Reference is now made to Fig. 10E, which illustrates an apparatus for detecting alternating-current components in the current flowing through system conductors according to illustrative embodiments. Conductor 142 may be a conductor carrying current I_142, which may be similar to or the same as currents IL, Io, Io1 or Io2 of Fig. 10B. Current I_142 may include a direct-current (DC) component which may correspond to a DC current such as Io_a, Io_a1 or Io_a2 of Fig. 10D. Current I_142 may further include an alternating-current (AC) component I_rip caused by variations in the current flowing through a power-converter inductor (e.g. inductor L of circuitry 140a in Fig. 10B). Ammeter A5 may be coupled to conductor 142 and may be configured to measure the AC-current component I_rip of current I_142. According to one illustrative embodiment, ammeter A5 comprises windings wound around conductor 142 and coupled (e.g. connected) to resistor R. According to Faraday's Law of Induction, the voltage measured across resistor R will be proportional to the change in magnetic flux through the windings, which in turn will be proportional to the current flowing through the windings. In some embodiments, a different type of AC-ammeter may be used, such as a hall effect sensor.

The current I_rip measured by ammeter A5 may depend on the amplitude, frequency, and duty cycle of the AC-component of the current flowing through conductor 142. For example, if the AC component of current I_142 has a high frequency (e.g. tens or hundreds of kHz, or MHz), ammeter A5 may detect a corresponding high frequency in current I_rip. Similarly, the positive and negative slopes of a triangular current waveform may be calculated by ammeter A5. In some embodiments, ammeter A5 provides current measurements to controller 143, with controller 143 calculating the frequency, slope values and amplitude of the corresponding triangular waveform. Controller 143 may be similar to or the same as control device 270 of Fig. 4A.

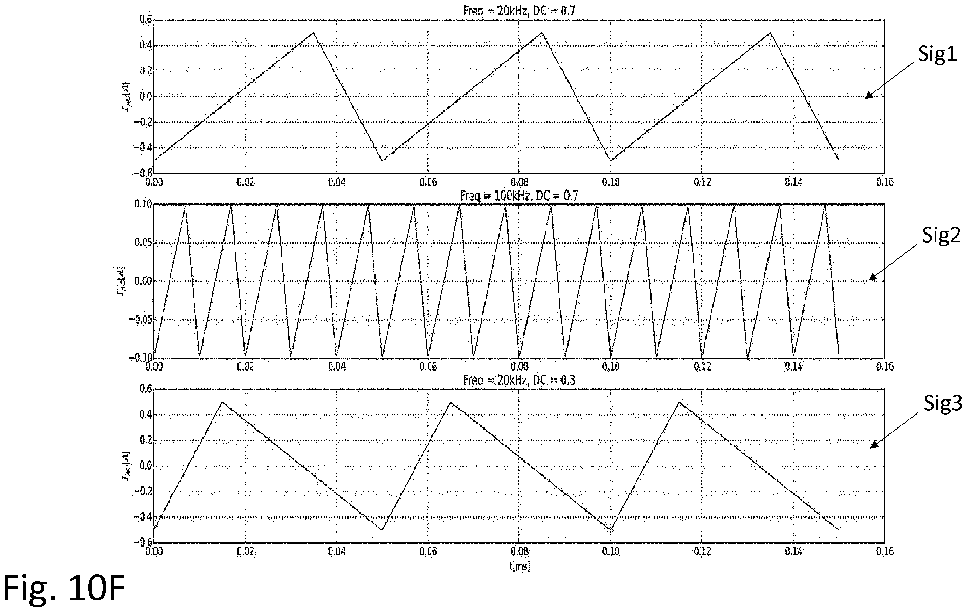

Reference is now made to Fig. 10F, which illustrates various alternating current signals which may be generated by controlling the switching of switches Q1-Q4 of Fig. 10D. **Sig1** is a 20kHz triangular wave with an amplitude of 1Vp-p, a rising slope of $\frac{1A}{3.5ms} \approx 286 \left[\frac{A}{sec}\right]$ and a falling slope of $\frac{-1A}{1.5ms} \approx -667 \left[\frac{A}{sec}\right]$. **Sig2** is a 100kHz triangular wave with an amplitude of 0.2Vp-p, a rising slope of $\frac{0.2A}{0.7ms} \approx 286 \left[\frac{A}{sec}\right]$ and a falling slope of $\frac{-0.2A}{0.3ms} \approx -667 \left[\frac{A}{sec}\right]$. It is evident that Sig1 and Sig2 have essentially the same shape and slope values, indicating that they are generated by switches switching at similar duty cycles. However, Sig2 is of a frequency larger by a factor of five than the frequency of Sig1, and the ripple amplitude is correspondingly smaller by a factor of five. Sig1 may represent a current measured by AC ammeter A2 when operating the circuit of Fig. 10B, switching switch Q3 at a frequency of 20kHz and a duty cycle of 0.7. When the frequency of Q3 is increased to 100kHz, the current measured by ammeter A2 corresponds to Sig 2. If the switching frequency of Q3 is maintained at 20kHz, but the duty cycle is changed from 0.7 to 0.3, ammeter A2 measures a current corresponding to Sig3, which has a positive slope of $\approx 667 \left[\frac{A}{sec}\right]$ and a negative slope of $\approx -286 \left[\frac{A}{sec}\right]$. In various embodiments, either a DC-current ammeter or an AC-current ammeter (e.g. ammeter A2) deployed in a first power device circuitry (e.g. circuitry 140b) may detect changes in current by changing the switching duty cycle of a switch (e.g. Q3) deployed in a second power device circuitry (e.g. circuitry 140a).

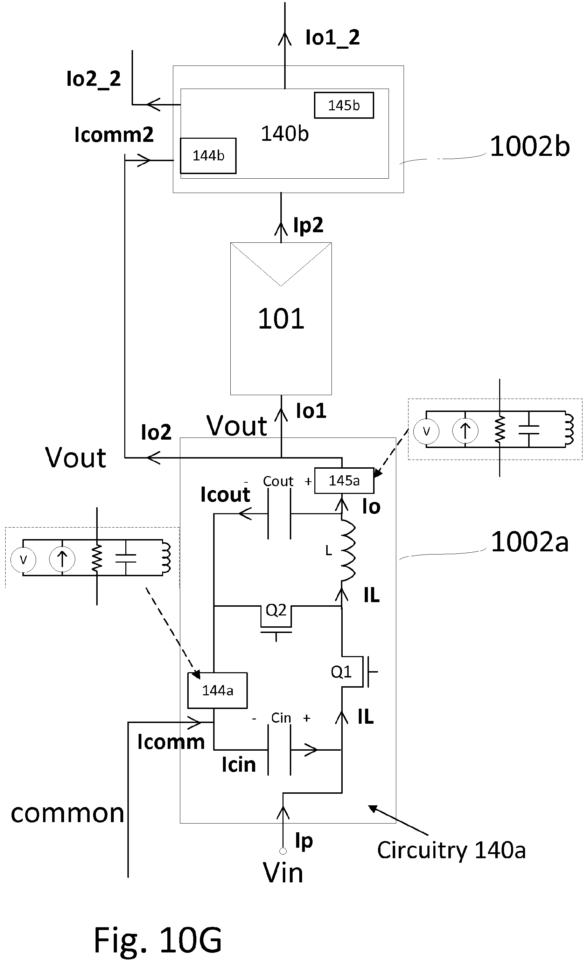

Reference is now made to Fig. 10G, which illustrates PV power device circuitry according to illustrative embodiments. Power line communication (PLC) circuit 144a may be deployed in circuitry 140a, between the common terminal and the negative node of output capacitor Cout. PLC circuit 145a may be deployed in circuitry 140a, between the Vout terminals and the positive node of output capacitor Cout. PLC circuits 144b and 145b may be similarly deployed in PV power device circuitry 140b. PLC circuits 144a-b and 145a-b may be variously implemented. In one embodiment, each PLC circuit comprises a parallel circuit comprising a resistor, an inductor, a capacitor, a current source and a voltmeter. The inductor and capacitor sizes are selected to resonate at a resonance frequency, with the equivalent circuit impedance achieving a maximum value at the resonance frequency. The current source of each PLC circuit injects a high-frequency (e.g. tens or hundreds of KHz) current signal into the PV power device circuitry, with a portion of the current signal reaching the other PLC devices, inducing a high-frequency voltage across the resistor terminals and measured by the voltmeter.

Implementation of Power Line Communications (PLC) over a conventional serial string of photovoltaic power devices may be challenging due to the presence of inductors (e.g. inductor L of circuitry 140a) which inherently suppress high-frequency current signals. This challenge is generally overcome by broadcasting current signals at a high enough amplitude to enable signal detection even after the attenuation caused by inductors. However, point-to-point PLC over serial strings of PV power devices includes the additional challenge of differentiating between current signals generated by different PV power devices. For example, in a string comprising ten serially-connected PV power devices, a current signal broadcast by a first PV power device may be received by the other nine power devices at about the same amplitude, making it difficult to determine the relative order of PV power devices with respect to one another.

By coupling an output of a first to PV power device to an input of an adjacent PV power device, the novel cabling method described herein may enable point-to-point PLC between adjacent PV power devices that is unimpeded by inductors. In the illustrative embodiment of Fig. 10G, PLC circuit 145a of circuitry 140a is coupled to PLC circuit 144b of circuitry 140b with no inductor disposed between them. Because there is no inductor between PLC circuits 145a and 144b, PLC circuit 145a may receive a high-frequency current signal transmitted by PLC circuit 144b at a higher amplitude than the signal amplitude received by other PLC circuits included in the serial string. Similarly, PLC circuit 144b may receive a high-frequency current signal transmitted by PLC circuit 145a at a higher amplitude than the signal amplitude received by other PLC circuits included in the serial string. The increased PLC signal amplitude detected by an adjacent PV power device enables each PV power device to determine which device(s) are its "neighbors," e.g., directly adjacently connected.

As mentioned above, in some illustrative embodiments (e.g. the circuitry of Fig. 10D) PV power device circuitry may enable one-way adjacency determination even without specialized PLC circuitry. For example, PV power device circuitry 140a may determine that it is connected to circuitry 140b by on knowing the duty cycle which each serially connected PV power device is being operated at and measuring the currents lo_a1 and lo_a2. However, circuitry 140b might not be able to determine that it is connected to 140a, rather, it may determine that it is connected to the next PV power device in the string (e.g. 140c, not explicitly depicted). By adding PLC circuitry (e.g. as depicted in Fig. 10G), the adjacency determination may be two-way.

Various aspects include mapping the location of power devices in photovoltaic installations, as well as various methods and apparatuses for carrying out localization algorithms. The circuitry disclosed in Figs. 10A-10G may enable certain PV power devices to determine which other PV power devices are directly connected to them if they are provided with information regarding the operating state of neighboring PV power devices. Aggregation of the determinations made by each PV power device in a serial string of PV power devices may enable a full map to be generated, the map including location information for each PV power device.

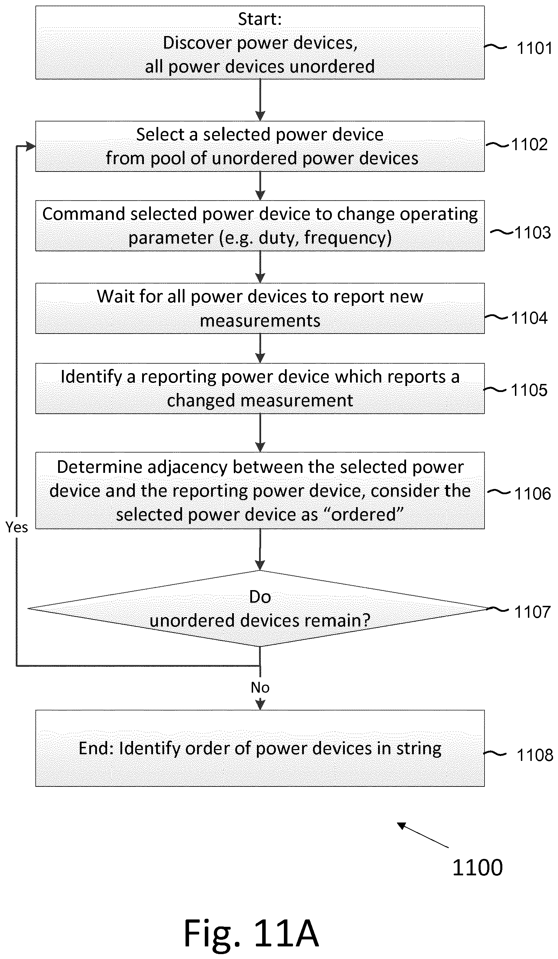

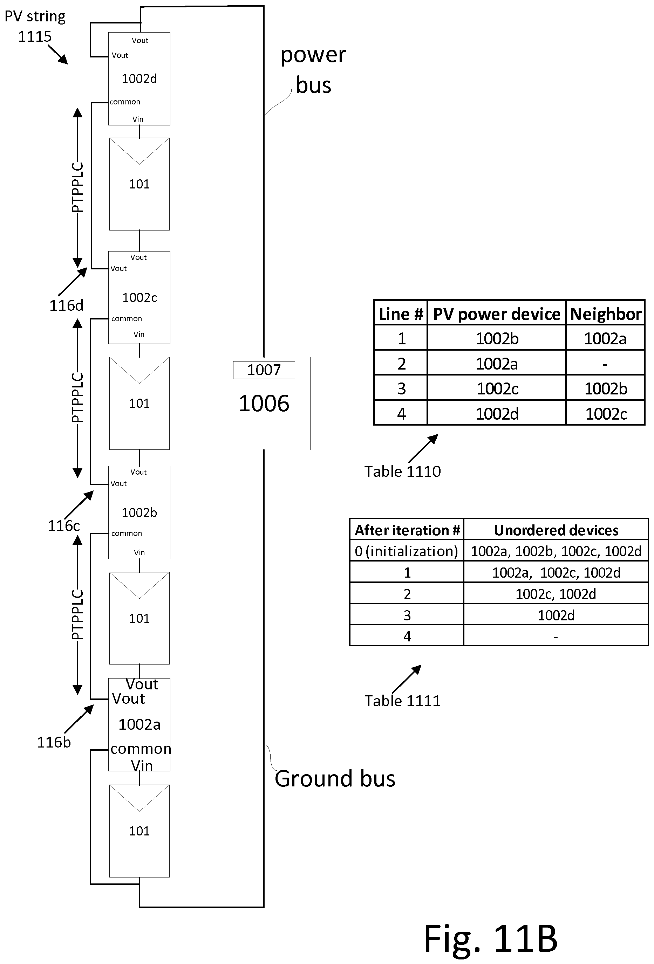

Reference is now made to Fig. 11A, which depicts an illustrative method for determining the order of serially coupled PV power devices comprising a photovoltaic string. Method 1100 may be applied to photovoltaic strings comprising PV power devices and circuitry according to illustrative embodiments (e.g. string 105 of Fig. 1A, which may comprise PV power devices 102 having circuitry similar to or the same as circuitry 140a of Figs. 10A-10D, 10G). Method 1100 may be carried out by a control device in communication with PV power devices. For example, the method may be carried out by system power device 106 of Fig. 1A, system power device 606 of Fig. 6, system power device 1006 of Fig. 11B, or system power device 706 of Figs. 7A-7B, with control and communication devices (e.g. devices comprised by system power device 110 of Fig. 1A, or controller 720 and communication device 750 of Fig. 7B) carrying out the method steps. In an alternative embodiment, a PV power device (e.g. PV power device 402 or 420 of Figs. 4a-4c) may operate in a "master mode" and carry out method 1100 with regard to the other PV power devices comprised by the PV string.

At step 1101, the method is initialized The control device carrying out method may discover PV power devices in a photovoltaic string, e.g. by receiving unique ID numbers of the PV power devices comprises by string. As an illustrative example, each PV power device may transmit a telemetry (e.g. by a wireless transmitter, or by power line communications) to the system power device, the telemetry including the PV power device's unique ID. The system power device may store the PV power devices' ID numbers to memory.

In some embodiments, the control device carrying out the method may have a list of PV power devices comprised in the PV string. For example, the control device may have PV power device identification numbers stored to memory. The method may identify an order in which the PV power devices are connected, with all serially coupled PV power devices initially unordered (i.e., there is no available information regarding the sequential order in which PV power devices are arranged. For example, for every pair of a first PV power device and a second PV power device in a serial PV string, it might not be known if the first PV power device is coupled closer to a ground bus than the second PV power device, or if the second PV power device is coupled closer to the ground bus than the first PV power device). At step 1102, a device (e.g., 706) may select one of the PV power devices as a selected power device which has not yet been ordered (i.e. its sequential order in relation to a different PV power device has not been determined) . The first time step 1102 is reached, all PV power devices in the string may be candidates for selection as the selected power device. In subsequent iterations of a portion of the method, step 1102 may select a selected power device from a shrinking pool of power devices, since at each iteration, a selected power device may be classified as "ordered" and might not be a candidate for selection at the next iteration.

At step 1103, the device performing the method may command the selected power device to change an operational parameter. For example, the selected power device may comprise switches (e.g., the selected power device may comprise circuitry such as circuitry 140b of Fig. 10D, including switches Q3 and Q4), and at step 1103, the selected power device may be commanded to change a duty cycle or frequency of a switching signal. The command to change an operational parameter may be issued by a system power device, and the transmitted command may include an ID number of the selected power device. In some embodiments, the command is received by some or all of the PV power devices, but may be ignored by all PV power devices not having the ID number indicated by the command (i.e. all PV power devices which are not the selected power device).

In illustrative PV systems, PV power devices comprising a PV string may periodically transmit reports and/or telemetries to system power devices. For example, with reference to Fig. 4A, communication device 250 may periodically transmit measurements (e.g. current, voltage, temperature and/or irradiance measurements) taken by sensor/sensor interfaces 280 to a system power device. At step 1104, the system power device carrying out method 1100 may wait to receive measurements from some or all of the PV power devices comprising the PV string. One or more of the PV power devices may report measurements which indicate that they are adjacent to the selected power device.

As an illustrative example, the selected power device may comprise circuitry 140b of Fig. 10D. Prior to step 1103, switch Q3 may be switched at a duty cycle of 0.7, and the power device comprising circuitry 140a may periodically report (e.g. to a system power device) the DC current measured by ammeters A1 and A2. As explained previously, the DC current measured by ammeter A2 may reflect the duty cycle of switch Q3. At step 1103, the selected power device may be commanded by a system power device to change the duty cycle of switch Q3 from 0.7 to 0.3. The change in duty cycle may be reflected by measurements taken by ammeter A2, and at step 1104, the new measurements may be received by a system power device from the power devices.

At step 1105, the system power device may compare measurements received from PV power devices to previously received measurements, and may detect the change in measurements received from circuitry 140b. In response to detecting the change in measurements received from circuitry 140b, the method may determine that circuitry 140b is adjacent to the selected power device, determine that circuitry 140b is comprised by a second, reporting power device adjacent to the selected power device, and uniquely identify the reporting power device (e.g. identified by its associated unique ID number) as being adjacent to the selected power device (e.g., as identified by its associated unique ID number).

At step 1106, the system power device carrying out method 1100 method may consider the selected power device as "ordered" and remove it from the pool of unordered devices. The method may save to memory an indication that the selected power device is adjacent to the reporting power device. As the method iterates through steps 1102-1107, the method may create a table mapping selected PV power devices to their "neighbors", i.e. one or more adjacent PV power devices.

At step 1107, if unordered devices remain, the method may loop back to step 1102. If no unordered devices remain, the method may proceed to step 1108, and aggregate the results stored when iterating over steps 1102-1107. The results stored by the time step 1108 is reached may enable the method to identify the sequence in which the PV power devices are wired in the string.

Reference is now made to Fig. 11B, which illustrates, by way of example, a result of running method 1100 on an illustrative PV string. In this illustrative example, PV string 1115 comprises four PV power devices: 1002a, 1002b, 1002c and 1002d, each comprising circuitry similar to or the same as circuitry 140a of Figs. 10A-10D or of Fig. 10G. At the outset of the method, the order of the power devices is unknown (i.e. the method does not know which (i.e. first) PV power device is coupled to the ground bus, which (i.e. second) PV power device is coupled to the first PV power device, and so on. At the method initialization, table 1110 is empty, and table 111 indicates that the pool of unordered power devices comprises all of the PV power devices in string 1115. The first time the method reaches step 1102, the method selects (e.g. at random, the lowest ID number, etc.) power device 1002b as the selected power device. At step 1102, PV power device 1002b may be commanded to change an operating parameter (e.g. the duty cycle of switching elements in PV power device 1002b). At step 1104 PV power devices 1002a-d report measurements taken by sensors/sensor interfaces such as ammeters. At step 1105, the method may determine that only the measurements taken by PV power device 1002a have changed substantially, and may determine that PV power device 1002a is adjacent to PV power device 1002b. At step 1106, Line #1 of table 1110 may be saved to memory, indicating that PV power devices 1002a, 1002b are adjacent to one another, and PV power device 1002b may be removed from the pool of unordered devices (as indicated by table 1111, in the line corresponding to the end of the first iteration).

At step 1107, the method may determine that the pool of unordered devices is not empty, loop back to step 1102, and select PV power device 1002a as the selected power device. In some embodiments, the selection may be random. In some embodiments, the reporting power device of the previous iteration may become the selected power device (provided it is still in the pool of unordered devices). At the next time step 1105 is reached, the method may determine that no PV power devices have reported changed measurements, and may determine that PV power device 1002a is coupled to the ground bus. In this iteration, no reporting power device may be labeled, and Line #2 of table 1110 may be generated indicating the PV power device 1002a has no neighbor at this iteration. PV power device 1002a may be removed from the pool of unordered devices at step 1106.

After iterating through steps 1102-1107 an additional two times, step 1108 may be reached, with table 1110 having four line indicating the results of the four iterations through steps 1102-1107. At step 1108, the method may determine that PV power device 1002a is coupled to the ground bus, as indicated by Line #2 of table 1110. The method may determine that PV power device 1002b is coupled to PV power device 1002a (as indicated by Line #1 of table 1110), PV power device 1002c is coupled to PV power device 1002b (as indicated by Line #3 of table 1110), and that PV power device 1002d is coupled to PV power device 1002c (as indicated by Line #4 of table 1110). The method may therefore output the determination that the order of the power devices is 1002a-1002b-1002c-1002d, as shown in the figure.

Point-to-point PLC between adjacent power devices may be used for a variety of communication and control applications in addition to mapping photovoltaic installations. For example, in some photovoltaic installations, photovoltaic power devices may measure operational parameters such as input or output voltage, input or output current, input or output power, and the temperature and/or solar irradiance in the vicinity of the power device. These operational parameters may be periodically transmitted via PLC (e.g.., by a sequence of point-to-point PLC transmissions along the string of power devices) to a data collection point, such as a memory or control device (e.g. a dedicated data collection or control device, or a device included in a system device such as a power combiner box or DC-to-AC inverter). In PLC that does not use the point-to-point configuration as disclosed herein, a transmitted data packet may be transmitted at a high power amplitude, to enable the transmitted signal to be received at the data collection point at a power amplitude sufficient to be detected by PLC receiving circuitry. For example, a last power device may be located 100 meters away from the data collection point, with 15 other power devices connected in between the last power device and the data collection point. Without using point-to-point PLC, the last power device would need to transmit a high-power signal to be received 100m away after traversing 15 other power devices. By taking advantage of circuitry deployed in the illustrative embodiment of Fig. 10G, each respective first power device may transmit a signal to be received at the second power device immediately adjacent to the first power device, each power device repeating all messages received from other power devices, reducing the required signal power amplitude. The power device connected to the data collection point may be physically closest to the data collection point, and may transmit data at an amplitude significantly lower than what would otherwise be required by each other power device, still enabling reception of the message by the device collecting data. In some embodiments, the power device connected to the data collection point may transmit data at an amplitude sufficient to traverse several PV power devices. One possible advantage of transmitting data at an increased amplitude may be enablement of continuous communication in case an intermediate device fails. Referring again to Fig. 11B, PV power device 1002a may communicate with PV power device 1002b using Point-to-Point Power Line Communications (PTPPLC) over bypass path 116b. In some embodiments (e.g. each PV power device 1002 has circuitry similar to or the same as circuitry 140a of Fig. 10A), communication may be uni-directional (e.g. power device 1002b is able to send data to power device 1002a, while power device 1002a might not be able to send data to power device 1002b), and in some embodiments (e.g. each PV power device 1002 has circuitry similar to or the same as circuitry 140a of Fig. 10G), communication may be bidirectional (for example, power devices 1003a and 1003b may be able to send data to each other). System power device 1006 (e.g. DC-to-AC inverter or combiner box) may be similar to system power device 110 of Fig. 1A, and may be coupled between the ground bus and power bus, and may comprise a data-collection device (e.g. a memory device, a controller, etc.-not explicitly depicted). System power device 1006 may further comprise PLC device 1007 coupled to carry out power line communications over the power bus and/or the ground bus. Similarly to other illustrative embodiments disclosed herein, additional PV strings similar to PV string 1115 (not explicitly depicted) may be coupled in parallel with PV string 1115, and coupled to system power device 1006. In some embodiments enabling one-way PLC, PV power device 1002d may transmit data to PV power device 1002c, PV power device 1002c may transmit data to PV power device 1002b, PV power device 1002b may transmit data to PV power device 1002a, and PV power device 1002a may transmit data to system power device 1006. In some embodiments enabling two-way PLC, PV power device 1002d may transmit data to system power device 1006 and PV power device 1002c, PV power device 1002c may transmit data to PV power devices 1003d and 1003b, and so on.

System power device 1006 may be configured to transmit commands and/or sent data to PV power devices 1002a-d. For example, step 1103 of method 1100 may comprise system power device 1006 transmitting a PLC signal over the power bus indicating an ID number of a selected PV power device.

In some embodiments, a message sent by a PV power device to an adjacent PV power device may be transmitted at a power amplitude significantly lower than a message which may be sent to system power device (e.g. 1006). For example, communication between PV power devices 1002b and 1002c may utilize much lower power than communication between PV power device 1002b and system power device 1006, due to the much shorter distance and lower number of electrical circuits in between the two communicating devices. In case a PV power device (e.g. 1002b) fails, two PV power devices adjacent to the failed PV power device (e.g. 1002a and 1002c) may communicate via PLC, with PV power device 1002b providing a bypass path for PLC signals. PLC between PV power devices 1002a and 1002c may be carried out at a reduced amplitude compared to the amplitude that would be required for PV power device 1002c to transmit directly to system power device 1006. Significant power savings may be realized by not attempting to transmit data to system power device 1006 by PV power devices not physically close to system power device 1006. Furthermore, the size and cost of associated circuitry for transmitting PLC messages may be significantly reduced by limiting the transmitted data to a lower power amplitude.

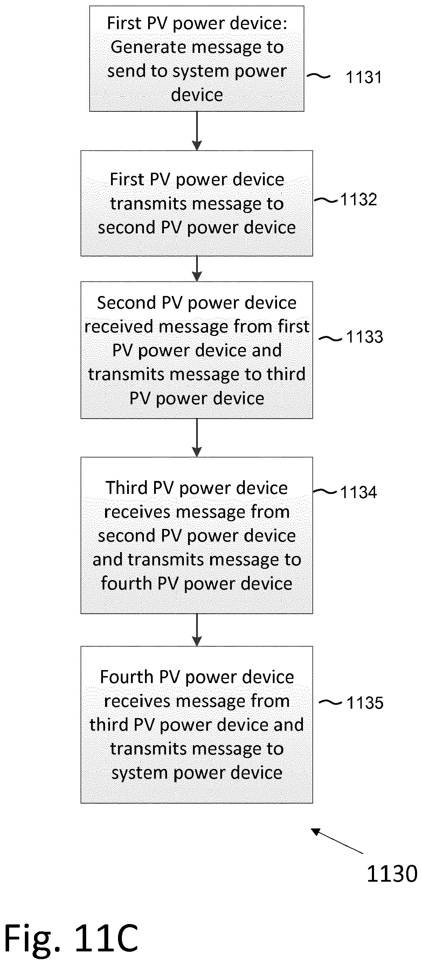

Reference is now made to Fig. 11C, which illustrates a method for point-to-point power line communications (PTPPLC) according to illustrative embodiments. Method 1130 may be used when, for example, a first PV power device (e.g. PV power device 1002a of Fig. 11B) may send a message (e.g. comprising telemetry data or other operational data) to a system power device (e.g. system power device 1006.) At step 1131, the first PV power device (e.g., 1002a) generates the message to be sent. At step 1132, the first PV power device transmits the message using PTPPLC to a second, adjacent PV power device (e.g., 1002b). For example, the message may be encoded as a high-frequency (e.g. tens or hundreds of kHz) signal transmitted over a first bypass path between the PV power devices (e.g., 116b of Fig. 11B). In some embodiments, the first PV power device may transmit a message to the second PV power device through a PV generator, e.g. the PV generator 101 coupled between PV power devices 1002a and 1002b). At step 1133, the second PV power device (e.g., 1002b) may receive the message transmitted over the bypass path, and may re-transmit the message to a third PV power device adjacent to the re-transmitting PV power device (e.g., 1002c) over a second bypass path (e.g., 116c). At step 1134, the third PV power device (e.g. 1002c) may receive the message re-transmitted over the second bypass path (e.g., 116c), and may re-transmit for a second time the message to a third PV power device (e.g. 1002d) over a third bypass path (e.g. 116d). Each PV power device in a PV string may receive a message from a first adjacent PV power device, and re-transmit the message to a second adjacent PV power device, until the message is received by a final PV power device adjacent or in close physical proximity to a system power device (e.g. 1006). At step 1134, the final PV power device (e.g. 1002d) may receive the message transmitted over a final bypass path, and may forward the message to a system power device (e.g. 1006) over the power bus. In some embodiments, the communication connections may be reversed, i.e. the first PV power device (e.g. 1002a) may communicate directly with system power device 1006 over the ground bus, with messages generated by the final PV power device (e.g. 1002d) passing through intermittent PV power devices (e.g. 1002c, 1002b and 1002a). In some embodiments, the first and final PV power devices (e.g. 1002a and 1002d) may communicate directly with the system power device (e.g. 1006) over either the ground bus or the power bus, with messages generated by intermediate PV power devices (e.g. 1002b and 1002c) passing through the first or final PV power devices (e.g. 1002a or 1002d) for transmission to system power device (e.g. 1006).

Illustrative embodiments may include a system comprising a plurality of DC/DC converters, each DC/DC converter receiving power from a photovoltaic generator, the DC/DC converters coupled in series or in parallel between a ground bus and a power bus, the DC/DC converters configured to output a time-varying DC voltage. A system power device comprising a group of switches is coupled between the ground bus and the power bus, and is configured to receive the time-varying DC voltage and output an AC voltage. In some embodiments, the system power device further comprises a filter, a controller and/or a communication device. In some embodiments, the controller is configured to switch the switches featured by system power device. In some embodiments, the communication device is configured to communicate with communication devices featured by the PV power devices. In some embodiments, the system power device further comprises a second group of switches, the controller configured to switch the second group of switches in response to a failure of one or more of the first group of switches. In some embodiments, the system includes a second system power device, the second system power device operable in response to a failure of the first system power device. In some embodiments, the DC/DC converters are configured to output synchronized time-varying DC voltage and current signals.

In the illustrative embodiments disclosed herein, photovoltaic generators are used to exemplify power sources which may make use of the novel features disclosed. In some embodiments, the power sources may include batteries, supercapacitors, wind or hydroelectric turbines, fuel cells or other energy sources in addition to or instead of photovoltaic generators. The power sources may be alternating current (AC) power sources or direct current (DC) power sources. In some embodiments, batteries may be both used as a power source and used as an electrical load, and charged by the system power sources. The current routing methods and other techniques disclosed herein may be applied to alternative power sources such as those listed above, and the nearly exclusive mentioning of photovoltaic generators as power sources is not intended to be limiting in this respect.

It is noted that various connections are set forth between elements herein. These connections are described in general and, unless specified otherwise, may be direct or indirect; this specification is not intended to be limiting in this respect. Further, elements of one embodiment may be combined with elements from other embodiments in appropriate combinations or subcombinations. For example, the power device and current routing elements of one embodiment may be interchanged with the power device and current routing elements of other embodiments. For example, PV generator 101 from Fig. 1A may be interchangeable with PV generator 501 from Fig. 5 and/or generator 101 of Figs. 10A-10D and 10G, and string 105 from Figs. 1A, 1C and ID may be interchangeable with string 205 of Fig. 2A and/or string 805 of Fig. 8.

**Claims**

1. A system comprising:

   a plurality of power devices (102, 112, 202, 302, 402, 420, 502, 702, 802, 902, 1002) arranged in a sequence, wherein each power device comprises a power conversion circuit, an output, an input terminal, and a common; and
   a plurality of first current paths, wherein, between each adjacent pair of the power devices in the sequence, one of the plurality of first current paths connects the output of a first power device of the adjacent pair to the common of a second power device of the adjacent pair, and wherein the output of the first power device of the adjacent pair is configured to be connected by one of a plurality of second current paths through one of a plurality of power sources (101, 201, 501, 701, 801, 901) to the input terminal of the second power device of the adjacent pair.

2. The system of claim 1, further comprising the plurality of power sources and the plurality of second current paths, wherein the output of the first power device of the adjacent pair is connected by one of the plurality of second current paths through one of the plurality of power sources to the input terminal of the second power device of the adjacent pair.

3. The system of claims 1 or 2, wherein each of the plurality of power devices comprises a second input terminal, wherein the output of the first power device of the adjacent pair is configured to be connected by one of a plurality of third current paths through a further one of a plurality of power sources to the second input terminal of the second power device of the adjacent pair.

4. The system of claim 3, further comprising the plurality of power sources, the plurality of second current paths, and the plurality of third current paths, wherein the output of the first power device of the adjacent pair is connected by one of the plurality of second current paths through one of the plurality of power sources to the input terminal of the second power device of the adjacent pair, and wherein the output of the first power device of the adjacent pair is connected by one of a plurality of third current paths through the further one of a plurality of power sources to the second input terminal of the second power device of the adjacent pair.

5. The system of any of claims 1 to 4, wherein the first current path is configured to carry direct current (DC).

6. The system of any of claims 1 to 4, wherein the first current path is configured to carry alternating current (AC).

7. The system of any of claims 1 to 6, wherein an ending power device of the power devices is arranged at an end of the sequence, is the second power device in only one of the adjacent pairs, and has an output connected to a ground bus or a power bus.

8. The system of any of claims 1 to 7, wherein a beginning power device of the power devices is arranged at a beginning of the sequence, is the first power device in only one of the adjacent pairs, and is connected to a power bus or a ground bus through separate third and fourth paths, the third path connecting a common of the beginning power device to the power bus or ground bus and the fourth path connecting an input terminal of the beginning power device through a further one of the power sources to the power bus or the ground bus.

9. The system of any of claims 1 to 8, wherein the power sources comprise photovoltaic generators.

10. The system of any of claims 1 to 9, wherein each of the power devices is integrated with one of the power sources to form one of a plurality of integrated apparatuses.

11. The system of claim 1, wherein:
the output comprises either: one output terminal (T37), two output terminals (T3, T4), three output terminals (Tout1, Tout2, Tout3), or an output conductor (403b) and an output terminal (404b).

12. The system of claim 1, wherein:
the common comprises either: a common terminal (412) or a common conductor (403a).

13. A method comprising:

arranging a plurality of power devices (102, 112, 202, 302, 402, 420, 502, 702, 802, 902, 1002) in a sequence, wherein each of the power devices comprises a power conversion circuit; and dividing, for each adjacent pair of power devices in the sequence, a current flowing from an output of a first power device of the adjacent pair into at least two portions flowing along at least two paths to a second power device of the adjacent pair, wherein one or more of the at least two portions flows through a respective one or more power sources of a plurality of power sources (101, 201, 501, 701, 801, 901), and one of the at least two portions bypasses the one or more power sources of the plurality of power sources.

14. The method of claim 13, comprising combining, in the second power device of each adjacent pair, the current flowing in the at least two portions from the output of the first power device.

15. The method of claims 13 or 14, comprising operating the first and the second power devices to perform one or more of: direct current to direct current (DC/DC) power conversion, direct current to alternating current (DC/AC) power conversion, or alternating current to alternating current (AC/AC) power conversion.

16. The method of any of claims 13 to 15, comprising embedding the first and the second power devices in first and second power sources of the plurality of power sources.

17. The method of any of claims 13 to 16, wherein the plurality of power sources comprise photovoltaic generators.

**Patentansprüche**

1. System, umfassend:

eine Vielzahl von Leistungsvorrichtungen (102, 112, 202, 302, 402, 420, 502, 702, 802, 902, 1002), angeordnet in einer Abfolge, wobei jede Leistungsvorrichtung eine Leistungswandlungsschaltung, einen Ausgang, einen Eingangsanschluss und eine gemeinsame Leitung umfasst; und
eine Vielzahl erster Strompfade, wobei zwischen jedem in der Abfolge benachbarten Paar der Leistungsvorrichtungen einer der Vielzahl erster Strompfade den Ausgang einer ersten Leistungsvorrichtung des benachbarten Paars mit der gemeinsamen Leitung einer zweiten Leistungsvorrichtung des benachbarten Paars verbindet, und wobei der Ausgang der ersten Leistungsvorrichtung des benachbarten Paars konfiguriert ist, um über einen einer Vielzahl zweiter Strompfade durch eine einer Vielzahl von Leistungsquellen (101, 201, 501, 701, 801, 901) mit dem Eingangsanschluss der zweiten Leistungsvorrichtung des benachbarten Paars verbunden zu sein.

2. System gemäß Anspruch 1, ferner umfassend die Vielzahl von Leistungsquellen und die Vielzahl zweiter Strompfade, wobei der Ausgang der ersten Leistungsvorrichtung des benachbarten Paars über einen der Vielzahl zweiter Strompfade durch eine der Vielzahl von Leistungsquellen mit dem Eingangsanschluss der zweiten Leistungsvorrichtung des benachbarten Paars verbunden ist.

3. System gemäß Anspruch 1 oder 2, wobei jede der Vielzahl von Leistungsvorrichtungen einen zweiten Eingangsanschluss umfasst, wobei der Ausgang der ersten Leistungsvorrichtung des benachbarten Paars konfiguriert ist, um über einen einer Vielzahl dritter Strompfade durch eine weitere eine einer Vielzahl von Leistungsquellen mit dem zweiten Eingangsanschluss der zweiten Leistungsvorrichtung des benachbarten Paars verbunden zu sein.

4. System gemäß Anspruch 3, ferner umfassend die Vielzahl von Leistungsquellen, die Vielzahl zweiter Strompfade, und die Vielzahl dritter Strompfade, wobei der Ausgang der ersten Leistungsvorrichtung des benachbarten Paars über einen der Vielzahl zweiter Strompfade durch eine der Vielzahl von Leistungsquellen mit dem Eingangsanschluss der zweiten Leistungsvorrichtung des benachbarten Paars verbunden ist, und wobei der Ausgang der ersten Leistungsvorrichtung des benachbarten Paars über einen einer Vielzahl dritter Strompfade durch die weitere eine einer Vielzahl von Leistungsquellen mit dem zweiten Eingangsanschluss der zweiten Leistungsvorrichtung des benachbarten Paars verbunden ist.

5. System gemäß einem der Ansprüche 1 bis 4, wobei der erste Strompfad konfiguriert ist, Gleichstrom (DC) zu führen.

6. System gemäß einem der Ansprüche 1 bis 4, wobei der erste Strompfad konfiguriert ist, Wechselstrom (AC) zu führen.

7. System gemäß einem der Ansprüche 1 bis 6, wobei eine End-Leistungsvorrichtung der Leistungsvorrichtungen an einem Ende der Abfolge angeordnet ist, die zweite Leistungsvorrichtung in nur einem der benachbarten Paare ist, und einen Ausgang, verbunden mit einem Erdungsbus oder einem Leistungsbus, hat.

8. System gemäß einem der Ansprüche 1 bis 7, wobei eine Anfangs-Leistungsvorrichtung der Leistungsvorrichtungen an einem Anfang der Abfolge angeordnet ist, die erste Leistungsvorrichtung in nur einem der benachbarten Paare ist, und mit einem Leistungsbus oder einem Erdungsbus durch getrennte dritte und vierte Pfade verbunden ist, der dritte Pfad verbindend eine gemeinsame Leitung der Anfangs-Leistungsvorrichtung mit einem Leistungsbus oder Erdungsbus und der vierte Pfad verbindend einen Eingangsanschluss der Anfangs-Leistungsvorrichtung durch eine weitere eine der Leistungsquellen mit dem Leistungsbus oder dem Erdungsbus.

9. System gemäß einem der Ansprüche 1 bis 8, wobei die Leistungsquellen photovoltaische Generatoren umfassen.

10. System gemäß einem der Ansprüche 1 bis 9, wobei jede der Leistungsvorrichtungen mit einer der Leistungsquellen integriert ist, um eine einer Vielzahl integrierter Einrichtungen auszubilden.

11. System gemäß Anspruch 1, wobei:
der Ausgang eines umfasst: einen Ausgangsanschluss (T37), zwei Ausgangsanschlüsse (T3, T4), drei Ausgangsanschlüsse (Tout1, Tout2, Tout3), oder einen Ausgangsleiter (403b) und einen Ausgangsanschluss (404b).

12. System gemäß Anspruch 1, wobei:
die gemeinsame Leitung eines umfasst: einen gemeinsamen Anschluss (412) oder einen gemeinsamen Leiter (403a).

13. Verfahren, umfassend:

Anordnen einer Vielzahl von Leistungsvorrichtungen (102, 112, 202, 302, 402, 420, 502, 702, 802, 902, 1002) in einer Abfolge, wobei jede der Leistungsvorrichtungen eine Leistungsumwandlungsschaltung umfasst; und
Aufteilen, für jedes benachbarte Paar von Leistungsvorrichtungen in der Abfolge, eines Stroms fließend von einem Ausgang einer ersten Leistungsvorrichtung des benachbarten Paars in mindestens zwei Teile, fließend entlang mindestens zweier Pfade zu einer zweiten Leistungsvorrichtung des benachbarten Paars, wobei einer oder mehrere der mindestens zwei Teile durch eine entsprechende einer oder mehrerer Leistungsquellen einer Vielzahl von Leistungsquellen (101, 201, 501, 701, 801, 901) fließt, und einer der mindestens zwei Teile die eine oder mehrere Leistungsquellen der Vielzahl von Leistungsquellen überbrückt.

**14.** Verfahren gemäß Anspruch 13, umfassend Kombinieren, in der zweiten Leistungsvorrichtung jedes benachbarten Paars, des Stroms, fließend in den mindestens zwei Teilen von dem Ausgang der ersten Leistungsquelle.

**15.** Verfahren gemäß Anspruch 13 oder 14, umfassend Betreiben der ersten und der zweiten Leistungsvorrichtung, um eines oder mehr durchzuführen von: Gleichstrom zu Gleichstrom(DC/DC) Leistungswandlung, Gleichstrom zu Wechselstrom(DC/AC) Leistungswandlung oder Wechselstrom zu Wechselstrom(AC/AC) Leistungswandlung.

**16.** Verfahren gemäß einem der Ansprüche 13 bis 15, umfassend Einbetten der ersten und der zweiten Leistungsvorrichtung in erste und zweite Leistungsquellen der Vielzahl von Leistungsquellen.

**17.** Verfahren gemäß einem der Ansprüche 13 bis 16, wobei die Vielzahl von Leistungsquellen photovoltaische Generatoren umfasst.

## Revendications

**1.** Système comprenant :

une pluralité de dispositifs de puissance (102, 112, 202, 302, 402, 420, 502, 702, 802, 902, 1002) disposés dans une séquence, dans lequel chaque dispositif de puissance comprend un circuit de conversion d'énergie, une sortie, une borne d'entrée et un commun ; et
une pluralité de premiers chemins de courant, dans lequel, entre chaque paire adjacente des dispositifs de puissance dans la séquence, l'un de la pluralité de premiers chemins de courant relie la sortie d'un premier dispositif de puissance de la paire adjacente au commun d'un deuxième dispositif de puissance de la paire adjacente, et dans lequel la sortie du premier dispositif de puissance de la paire adjacente est configuré pour être connectée par un deuxième chemin parmi une pluralité de deuxièmes chemins de courant à travers une source d'énergie parmi une pluralité de sources d'énergie (101, 201, 501, 701, 801, 901) vers la borne d'entrée du deuxième dispositif de puissance de la paire adjacente.

**2.** Système selon la revendication 1, comprenant en outre la pluralité de sources d'énergie et la pluralité de deuxièmes chemins de courant, dans lequel la sortie du premier dispositif de puissance de la paire adjacente est connectée par l'une de la pluralité de deuxièmes chemins de courant à travers l'une de la pluralité de sources d'énergie vers la borne d'entrée du deuxième dispositif de puissance de la paire adjacente.

**3.** Système selon les revendications 1 ou 2, dans lequel chacun de la pluralité de dispositifs de puissance comprend une deuxième borne d'entrée, dans lequel la sortie du premier dispositif de puissance de la paire adjacente est configurée pour être connectée par l'une d'une pluralité de troisièmes chemins de courant à travers une autre source de courant parmi une pluralité de sources d'énergie à la deuxième borne d'entrée du deuxième dispositif de puissance de la paire adjacente.

**4.** Système selon la revendication 3, comprenant en outre la pluralité de sources d'énergie, la pluralité de deuxièmes chemins de courant et la pluralité de troisièmes chemins de courant, dans lequel la sortie du premier dispositif de puissance de la paire adjacente est connectée par l'une de la pluralité de deuxièmes chemins de courant à travers l'une de la pluralité de sources d'énergie à la borne d'entrée du deuxième dispositif de puissance de la paire adjacente, et dans lequel la sortie du premier dispositif de puissance de la paire adjacente est connectée par une parmi une pluralité de troisième chemins de courant à travers l'autre source d'énergie parmi la pluralité de sources d'énergie à la deuxième borne d'entrée du deuxième dispositif de puissance de la paire adjacente.

**5.** Système selon l'une quelconque des revendications 1 à 4, dans lequel le premier chemin de courant est configuré pour transporter du courant continu (DC).

**6.** Système selon l'une quelconque des revendications 1 à 4, dans lequel le premier chemin de courant est configuré pour transporter un courant alternatif (AC).

**7.** Système de l'une quelconque des revendications 1 à 6, dans lequel un dispositif de puissance finale des dispositifs de puissance est disposé à une extrémité de la séquence, est le deuxième dispositif de puissance dans une seule des paires adjacentes, et présente une sortie connectée à un bus de masse ou à un bus de puissance.

**8.** Système selon l'une quelconque des revendications 1 à 7, dans lequel un dispositif de puissance de début parmi les dispositifs de puissance est disposé au début de la séquence, est le premier dispositif de puissance dans une seule des paires adjacentes et est connecté à un bus de puissance ou à un bus de masse par des troisième et quatrième chemins séparées, la troisième chemin reliant un commun du dispositif de puissance de début au bus de puissance ou au bus de masse et la quatrième chemin reliant une borne d'entrée du dispositif de puissance de début via une autre des sources d'énergie vers le bus de puissance ou le bus de masse.

9. Système selon l'une quelconque des revendications 1 à 8, dans lequel les sources d'énergie comprennent des générateurs photovoltaïques.

10. Système selon l'une quelconque des revendications 1 à 9, dans lequel chacun des dispositifs de puissance est intégré à l'une des sources d'énergie pour former un appareil parmi une pluralité d'appareils intégrés.

11. Système selon la revendication 1, dans lequel :
la sortie comprend soit : une borne de sortie (T37), deux bornes de sortie (T3, T4), trois bornes de sortie (Tout1, Tout2, Tout3), soit un conducteur de sortie (403b) et une borne de sortie (404b).

12. Système selon la revendication 1, dans lequel :
le commun comprend soit : une borne commune (412) soit un conducteur commun (403a).

13. Procédé comprenant les étapes consistant à :

agencer une pluralité de dispositifs de puissance (102, 112, 202, 302, 402, 420, 502, 702, 802, 902, 1002) dans une séquence, dans lequel chacun des dispositifs de puissance comprend un circuit de conversion d'énergie ; et
diviser, pour chaque paire adjacente de dispositifs de puissance dans la séquence, un courant passant d'une sortie d'un premier dispositif de puissance de la paire adjacente en au moins deux parties s'écoulant le long d'au moins deux chemins vers un deuxième dispositif de puissance de la paire adjacente, dans lequel une ou plusieurs des au moins deux parties passent par une ou plusieurs sources d'énergie respectives d'une pluralité de sources d'énergie (101, 201, 501, 701, 801, 901) et une des au moins deux parties contourne la ou les plusieurs sources d'énergie de la pluralité de sources d'énergie.

14. Procédé selon la revendication 13, comprenant la combinaison, dans le deuxième dispositif de puissance de chaque paire adjacente, du courant circulant dans les au moins deux parties de la sortie du premier dispositif de puissance.

15. Procédé selon les revendications 13 ou 14, comprenant l'exploitation des premier et deuxième dispositifs de puissance pour effectuer une ou plusieurs des opérations suivantes : conversion d'énergie de courant continu en courant continu (DC/DC), conversion d'énergie de courant continu en courant alternatif (DC/AC) ou conversion d'énergie de courant alternatif en courant alternatif (AC/AC).

16. Procédé selon l'une quelconque des revendications 13 à 15, comprenant l'incorporation des premier et deuxième dispositifs de puissance dans les première et deuxième sources d'énergie parmi la pluralité de sources d'énergie.

17. Procédé selon l'une quelconque des revendications 13 à 16, dans lequel la pluralité de sources d'énergie comprend des générateurs photovoltaïques.

PV string
105

Vout
Vout

102
103n
common
Vin

101

⋮ ⋮

Vout
Vout

102
103c
common
Vin

104c

101

104b

Vout
Vout

102
103b
common
Vin

104a

101

103a

power bus

105 ● ● ● 105

106

Ground bus

100

# Fig. 1A

T4 → Vout

Vout
T3

casing

common
T2

Vin

T1

PV power
device 102

Fig. 1B

Fig. 1C

Fig. 1D

T37 → Vout

common —○— T27

casing

Vin

T17 ○

PV power
device 112

Fig. 1E

power bus

Vout

**112n**

com
Vin

5[A] ↑

↑ 10[A]

**101n**

113n

• • •
• • •

Vout

113c

**112**

com
Vin

↑ 10[A]

5[A] ↑

**101b**

Vout

113
b

**112a**

com
Vin

↑ 10[A]

5[A] ↑

**101a**

↑ 10[A]

113a ↑15[A]

**PV string 115**

ground bus

# Fig. 1F

Fig. 2A

series string section 205

Fig. 2B

Fig. 3A

Vout

Vout

Cout

Q3

Q4

L

second central point

Q2

first central point

Q1

common

Cin

Circuit in PV
power device
302b

Vin

Fig. 3B

**Vin terminal 404a**

**casing 431**

**Vout terminal 404b**

| Power converter 440 | Sensor(s) 480 | Comm. device 450 |

Common bus 490

| Safety device 460 | MPPT 495 | Control device 470 |

**common conductor 403a**

**Circuitry 430**

**Vout conductor 403b**

**PV power device 402**

# Fig. 4A

EP 3 252 909 B1

Fig. 4B

**Fig. 4C**

casing 431

Vin terminal 411

Vout terminal 413

Power converter 440

Sensor(s) 480

Comm. device 450

Common bus 490

Safety device 460

MPPT 495

Control device 470

Common terminal 412

Vout terminal 414

Circuitry 430

PV power device 420

EP 3 252 909 B1

512    513

Vout    Vout

PV
power
device
502

PV
generator
501

common

510    511

515

Fig. 5

power bus

618a

515d

· · ·

515c

515b

515a

618b · · · 618b

606

ground bus

# Fig. 6

Fig. 7A

Fig. 7B

Controller 720

Comm. 750

input1

Q1 Q2

X Y

Q3 Q4

input2

Filter 730

Sensor 740

outputs

Full Bridge 711

System power device 706

Receive low-frequency-
reference sample                ~ 707

Adjust high-frequency
converter duty cycle to        ~708
output voltage
proportional to sample

Wait a short
period of time                 ~ 709

710

PV
generator
701

PV input+                      output+
DC/DC
Converter 703
PV input-    ref. input        output-

Reference signal
generator 704

702

# Fig. 7C

761 ⌇ [ n = 1 ]

Draw *n*-th sample from memory ⌇ 762

Adjust high-frequency converter duty cycle to output voltage proportional to sample ⌇ 763

Wait up to a short period of time ⌇ 764

Trigger received before time elapsed, or *n* is last sample

Time elapsed

n = n +1 ⌇ 765

760

Fig. 7D

Bypass path 803c

PV power device 802b

I_ 803b=

13.2

0

-8

Bypass path 803b

↑ 8[A]

PV generator 801b

↑ 8[A]

PV power device 802a

Bypass path 803a

I_ 803a=

11.2

0

-10

↑ 10[A]

PV generator 801a

↑ 10[A]

21.2

0

I_tot =

ground bus

PV string 805

# Fig. 8

Tout1

Tout2

Tout3

Vout

Vout

Vin DC/DC converter

DC/DC converter Vin

common

common

PV power device 902

Tin1

Tcom

Tin2

# Fig. 9A

Fig. 9B

Fig. 10A

Fig. 10B

Vout

Vout

**Io**

Q2

**Icomm1**

Q1

**Ip**

Circuitry 140a

Vin

# Fig. 10C

Fig. 10D

Fig. 10E

EP 3 252 909 B1

Fig. 10F

Io1_2

Io2_2

145b

Icomm2

140b

1002b

144b

Ip2

101

Io1

Vout

Io2

Vout

Icout

Cout

145a

Io

L

IL

Q2

144a

Q1

IL

Icomm

Cin

Icin

common

Ip

Circuitry 140a

Vin

Fig. 10G

Start:
Discover power devices,
all power devices unordered — 1101

Select a selected power device
from pool of unordered power devices — 1102

Command selected power device to change operating
parameter (e.g. duty, frequency) — 1103

Wait for all power devices to report new
measurements — 1104

Identify a reporting power device which reports a
changed measurement — 1105

Determine adjacency between the selected power
device and the reporting power device, consider the — 1106
selected power device as "ordered"

Yes

Do
unordered devices remain? — 1107

No

End: Identify order of power devices in string — 1108

1100

# Fig. 11A

Fig. 11B

**Table 1110**

| Line # | PV power device | Neighbor |
|--------|-----------------|----------|
| 1 | 1002b | 1002a |
| 2 | 1002a | - |
| 3 | 1002c | 1002b |
| 4 | 1002d | 1002c |

**Table 1111**

| After iteration # | Unordered devices |
|-------------------|-------------------|
| 0 (initialization) | 1002a, 1002b, 1002c, 1002d |
| 1 | 1002a, 1002c, 1002d |
| 2 | 1002c, 1002d |
| 3 | 1002d |
| 4 | - |

First PV power device:
Generate message to
send to system power
device — 1131

First PV power device
transmits message to
second PV power device — 1132

Second PV power device
received message from first
PV power device and
transmits message to third
PV power device — 1133

Third PV power device
receives message from
second PV power device
and transmits message to
fourth PV power device — 1134

Fourth PV power device
receives message from
third PV power device and
transmits message to
system power device — 1135

1130

Fig. 11C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 203367304 U